# EUROPEAN PATENT APPLICATION

(11) **EP 2 172 438 A1**
(43) Date of publication of application: **07.04.2010**
(21) Application number: 08776974.1
(22) Date of filing: 29.05.2008
(51) Int. Cl.: C04B 41/85, A47K 1/04, C09D 1/00, C09D 5/16, C09D 183/00, C09D 185/00, E03D 11/02

(54) **SANITARY WARE AND PROCESS FOR PRODUCTION THEREOF**

(30) Priority: 31.05.2007 JP 2007145022; 29.01.2008 JP 2008018046; 08.05.2008 JP 2008122683
(71) Applicant: Sumitomo Osaka Cement Co., Ltd., Tokyo 102-8465 (JP)
(72) Inventor: SHIGERU, Keijiro, Tokyo 102-8465 (JP); MAEDA, Daisaku, Tokyo 102-8465 (JP); METSUGI, Yasunori, Tokyo 102-8465 (JP); YAZAWA, Akira, Tokyo 102-8465 (JP); MARUYAMA, Taishi, Tokyo 102-8465 (JP)
(74) Representative: Vuillermoz, Bruno
(86) International application number: PCT/JP2008/059912
(87) International publication number: WO 2008/146880

(57) **Abstract**

The present invention provides a sanitary ware comprising a substrate and a coating film formed on the surface of the substrate, wherein the coating film contains silicon (Si), zirconium (Zr), and oxygen (O) and the mass percentage of silicon oxide (SiO₂) is 50% by mass or less, based on the total amount of zirconium oxide (ZrO₂) and silicon oxide (SiO₂), as the zirconium (Zr) and the silicon (Si) are taken up in terms of zirconium oxide (ZrO₂) and silicon oxide (SiO₂), respectively.

## Description

### TECHNICAL FIELD

The present invention relates to a sanitary ware and a process for production thereof, and in particular, a sanitary ware, wherein a sustained effect of preventing the adherence of water spots (including contaminants such as animal wastes and the like) is excellent, and even when the water spots are adhered onto the surface of a substrate constituting a product, the water spots can be easily removed, and a process for production thereof.

The present Application claims priority benefit based on Japanese Patent Application No. 2007-145022 filed on May 31, 2007 in Japan, Japanese Patent Application No. 2008-018046 filed on January 29, 2008 in Japan, and Japanese Patent Application No. 2008-122683 filed on May 8, 2008 in Japan, the content of each being incorporated herein by reference.

### BACKGROUND ART

Conventionally, contamination generated by the adherence of contaminants such as water spots, animal wastes, and the like is found everywhere under conditions in which water is attached and dried, such as kitchens, bathrooms, toilets, wash basins, and the like.
Water spots are generated by the precipitation of inorganic components dissolved in water when water evaporates, and particularly, if they are left to stand for a long period of time, they become too strongly adhered to be removed, and therefore, there has been inconvenience that if the water spots are to be removed too forcefully using chemicals, abrasives, or the like, the substrate of the product itself is damaged.

Furthermore, for example, in the case of treating contaminants such as animal wastes, vomit, and the like, feces or vomit is adhered onto the inside of the toilet, and accordingly, it may not be sufficiently detached therefrom only by flowing water. As a result, labor is required for cleaning, which is inconvenient. Furthermore, if such adhered materials are removed too forcefully using chemicals, abrasives, or the like, the toilet itself may be damaged, causing inconvenience.
Therefore, there has been proposed a product for the purpose of preventing the adherence of water spots including contaminants such as animal wastes, wherein a hydrophilic coating film or a hydrophobic coating film is formed on the surface of a substrate constituting the product.

For example, as a product for preventing the adherence of water spots, wherein a hydrophilic coating film is formed on the surface of a substrate, there has been proposed a product for preventing the adherence of water spots, which is improved in adhesion property between a hydrophilic film and a substrate surface, by forming a hydrophilic film containing a copolymer comprising a polyacrylic acid or a polyacrylic acid monomer in a silica-based film containing lithium on the substrate surface (Patent Documents 1 to 3).
In addition, there has also been a product for preventing the adherence of water spots, wherein a silicone resin or a fluorine resin is applied and cured on the surface of a glaze layer of a glazing product such as a sanitary ware or the like, thereby giving a hydrophobic coating film (Patent Document 4).

Patent Document 1: Japanese Unexamined Patent Application, First Publication No. 2003-301273
Patent Document 2: Japanese Unexamined Patent Application, First Publication No. 2003-299606
Patent Document 3: Japanese Unexamined Patent Application, First Publication No. 2002-302637
Patent Document 4: Pamphlet of International Publication No. WO 2001/044592
Patent Document 5: Japanese Unexamined Patent Application, First Publication No. 2005-321108

### DISCLOSURE OF THE INVENTION

### PROBLEMS TO BE SOLVED BY THE INVENTION

However, for the above-described conventional products for preventing the adherence of water spots, there have been problems as described below in a hydrophilic coating film or a hydrophobic coating film.
That is, for the hydrophilic coating film, water spreads itself thin on a film, and as a result, even though water is dried and the water spots are precipitated, they are hard to see. However, there is a problem that if the water spots are left to stand for a long period of time, during which water wetting and drying are repeated, the thickness of the water spots increases, and the water spots thus become strongly adhered, and as a result, they cannot be removed.

On one hand, with the hydrophobic coating film, when the film is at an angle, water forms water droplets on the film, and these water droplets roll down on the sloped surface, and as a result, even when the film is dried, the adherence of the water spots can be prevented so that the traces of the water droplets do not become water spots. On the other hand, in the case where the film is in a horizontal position, the water droplets remain on the film, and thus, when the water evaporates as it is, the traces of the water droplets becomes water spots, and thus, there is a problem in that the water spots remain conspicuous. Further, there is a problem that if these water droplets are left to stand for a long period of time, during which the generation of water droplets and drying are repeated, the water spots become strongly adhered, and thus, they cannot be removed.
In addition, there is a problem that the adhesion property between a hydrophobic coating film and a substrate is poor, and an effect of preventing the adherence of water spots cannot be obtained over a long period of time.

Furthermore, as for the above-described conventional products for preventing the adherence of water spots, once water spots are adhered onto the product, there is no way other than using physical methods such as rubbing in order to remove the water spots. However, in the case of using such a physical method, there is a problem in that there is a concern that the surface of the product will be damaged, and that the adherence of the water spots onto the substrate of the product cannot be effectively prevented.

The present invention has been made in order to solve the above-described problems, and thus, it is an object to provide a sanitary ware, wherein an effect of preventing the adherence of water spots (including contaminants such as animal wastes and the like) is excellent, and in addition, the effect of preventing the adherence of water spots is sustained for a long period of time, and further, in the case where water spots are adhered onto the surface of the substrate, the adhered water spots can be easily removed, and a process for production thereof.

### MEANS FOR SOLVING THE PROBLEMS

The present inventors have made extensive studies in order to solve the above-described problems, and as a result, they have found that if any one of a coating film having a specific composition of silicon (Si), zirconium (Zr), oxygen (O), and phosphorus (P) on the surface of the substrate and having the phosphorus (P) distributed on at least an outer layer part, and a coating film having zirconium (Zr), oxygen (O), and phosphorus (P) and having the phosphorus (P) distributed on at least an outer layer part is formed, an effect of preventing the adherence of water spots (hereinafter to be understood as including contaminants such as animal wastes and the like) is excellent, and in addition, the effect of preventing the adherence of water spots is sustained for a long period of time, and further, even though the water spots are adhered onto the surface of the substrate, the adhered water spots can be easily removed, thereby completing the present invention.

That is, the present invention relates to a sanitary ware including a substrate and a coating film formed on the surface of the substrate, **characterized in that** the coating film contains silicon (Si), zirconium (Zr), and oxygen (O) and that the mass percentage of silicon oxide (SiO₂) is 50% by mass or less, based on the total amount of zirconium oxide (ZrO₂) and silicon oxide (SiO₂), as the zirconium (Zr) component and the silicon (Si) component are taken up in terms of zirconium oxide (ZrO₂) and silicon oxide (SiO₂), respectively.
It is preferable that the coating film further contains phosphorus (P), and the phosphorus (P) is distributed on at least an outer layer part of the coating film.

The present invention relates to a sanitary ware including a substrate and a coating film formed on the surface of the substrate, **characterized in that** the coating film contains zirconium (Zr), oxygen (O), and phosphorus (P), and the phosphorus (P) is distributed on at least an outer layer part of the coating film. Here, the coating film may comprise only zirconium (Zr), oxygen (O), and phosphorus (P) in one embodiment.

The present invention relates to a process for production of a sanitary ware including a substrate and a coating film formed on the surface of the substrate, characterized by comprising applying a coating liquid including one or two or more zirconium (Zr) components selected from a group consisting of a zirconium alkoxide, a hydrolysate of the zirconium alkoxide, a chelate compound of the zirconium alkoxide, a chelate compound of the hydrolysate of the zirconium alkoxide, and a zirconium oxide fine powder having an average particle of 20 nm or less, a silicon (Si) component, and a solvent, in which the mass percentage of silicon oxide (SiO₂) is 50% by mass or less, based on the total amount of zirconium oxide (ZrO₂) and silicon oxide (SiO₂), as the zirconium (Zr) component and the silicon (Si) component are taken up in terms of zirconium oxide (ZrO₂) and silicon oxide (SiO₂) , respectively, onto at least a part of the surface of the substrate, thereby forming an applied film, and then subjecting the applied film to heat treatment at a temperature of typically room temperature or higher, thereby forming the coating film.
It is preferable that the coating liquid further comprises a phosphorus (P) component. Furthermore, the applied film is subjected to heat treatment at a temperature of preferably 100°C or higher, and more preferably 400°C or higher. This shall apply in the embodiments to be described below.

The present invention relates to a process for production of a sanitary ware including a substrate and a coating film formed on the surface of the substrate, characterized by comprising applying a coating liquid including one or two or more zirconium (Zr) components selected from a group consisting of a zirconium alkoxide, a hydrolysate of the zirconium alkoxide, a chelate compound of the zirconium alkoxide, a chelate compound of the hydrolysate of the zirconium alkoxide, and a zirconium oxide fine powder having an average particle of 20 nm or less, a silicon (Si) component, and a solvent, in which the mass percentage of silicon oxide (SiO₂) is 50% by mass or less, based on the total amount of zirconium oxide (ZrO₂) and silicon oxide (SiO₂), as the zirconium (Zr) component and the silicon (Si) component are taken up in terms of zirconium oxide (ZrO₂) and silicon oxide (SiO₂), respectively, onto at least a part of the surface of the substrate, thereby forming an applied film, subjecting the applied film to heat treatment at a temperature of room temperature or higher to provide a thin film, then applying a solution or dispersion comprising a phosphorus (P) component onto the thin film, and subsequently subjecting the film to heat treatment at a temperature of room temperature or higher to incorporate the phosphorus (P) component into the thin film, thereby forming the coating film.

The present invention relates to a process for production of a sanitary ware including a substrate and a coating film formed on the surface of the substrate, characterized by comprising applying a coating liquid including one or two or more zirconium (Zr) components selected from a group consisting of a zirconium alkoxide, a hydrolysate of the zirconium alkoxide, a chelate compound of the zirconium alkoxide, a chelate compound of the hydrolysate of the zirconium alkoxide, and a zirconium oxide fine powder having an average particle of 20 nm or less, a phosphorous (P) component, and a solvent, onto at least a part of the surface of the substrate, thereby forming an applied film, and then subjecting the applied film to heat treatment at a temperature of room temperature or higher, thereby forming the coating film.

The present invention relates to a process for production of a sanitary ware including a substrate and a coating film formed on the surface of the substrate, characterized by comprising applying a coating liquid including one or two or more zirconium (Zr) components selected from a group consisting of a zirconium alkoxide, a hydrolysate of the zirconium alkoxide, a chelate compound of the zirconium alkoxide, a chelate compound of the hydrolysate of the zirconium alkoxide, and a zirconium oxide fine powder having an average particle of 20 nm or less, and a solvent, onto at least a part of the surface of the substrate, thereby forming an applied film, subjecting the applied film to heat treatment at a temperature of room temperature or higher to provide a thin film, then applying a solution or dispersion comprising a phosphorus (P) component onto the thin film, and subsequently subjecting the film to heat treatment at a temperature of room temperature or higher to incorporate the phosphorus (P) component into the thin film, thereby forming the coating film.

### EFFECT OF THE INVENTION

The sanitary ware of the present invention can provide an excellent effect of preventing the adherence of water spots (including contaminants such as animal wastes and the like), and accordingly, it can sustain the effect of preventing the adherence of water spots over a long period of time. Therefore, even when the water spots are adhered onto the surface of the substrate, the water spots can be easily removed by a simple operation, which results in a reduction in labor as well as improved working efficiency.
As such, since there is no need for strong chemicals or abrasives to remove the adhered water spots, the burden on the environment can be reduced.
By the process for producing a sanitary ware of the present invention, a sanitary ware can be prepared simply as well as efficiently.

### BRIEF DESCRIPTION OF THE DRAWINGS

Fig. 1 is a cross-sectional view showing the sanitary ware of a first embodiment of the present invention.
Fig. 2 is a cross-sectional view showing the sanitary ware of a second embodiment of the present invention.
Fig. 3 is a cross-sectional view showing the sanitary ware of a third embodiment of the present invention.
Fig. 4 is a cross-sectional view showing the sanitary ware of a fourth embodiment of the present invention.
Fig. 5 is a cross-sectional view showing the sanitary ware of a fifth embodiment of the present invention.

### [Brief Description of Reference Numerals]

- 1: Sanitary ware
- 2: Substrate
- 3: Coating film
- 3a: Surface layer part
- 11: Sanitary ware
- 12: Coating film
- 21: Sanitary ware
- 22: Coating film
- 22a: Surface layer part
- 31: Sanitary ware
- 32: Coating film
- 41: Sanitary ware
- 42: Coating film

### BEST MODE FOR CARRYING OUT THE INVENTION

The best modes for implementing the sanitary ware and the process for production thereof of the present invention will be described.
Further, these modes will be described in detail for the purpose of clarifying the spirit of the present invention, and unless otherwise specified, the present invention is not intended to be limited thereto.

### <First Embodiment>

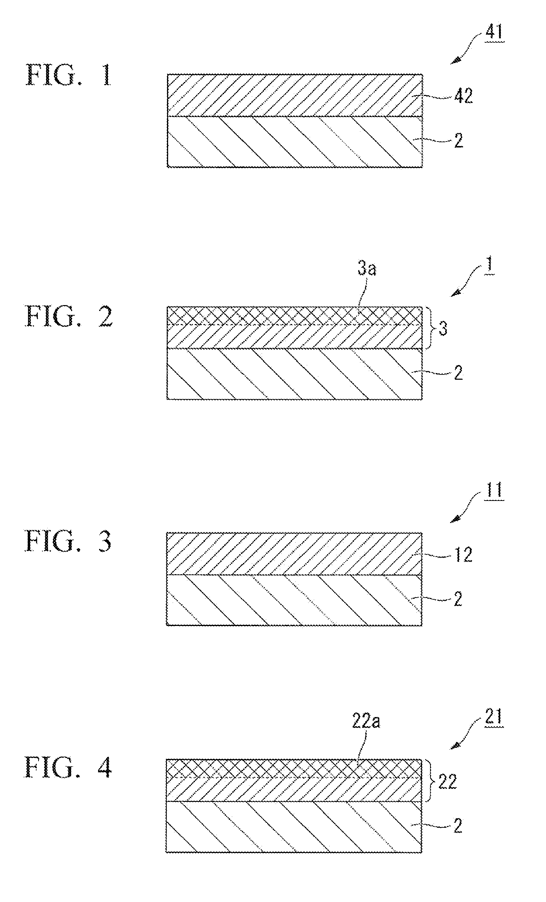

Fig. 1 is a cross-sectional view showing the sanitary ware of a first embodiment of the present invention. In the sanitary ware 41, a coating film 42 containing silicon (Si), zirconium (Zr), and oxygen (O) is formed in at least a region in which there is a concern that water spots (including contaminants such as animal wastes and the like) will be adhered onto the surface of a substrate 2 constituting the main body of the sanitary ware, and substantially not containing other components.

The "adherence of water spots" in the present invention refers to a state in which "water spots are attached onto the surface of the substrate constituting a product, and even when the attached water spots are solidified, they cannot be easily removed from the substrate", and further, the "prevention of the adherence of water spots" refers to "being able to easily remove the adhered water spots from the surface of the substrate".

As the shape of substrate 2, various shapes that are selected and used according to the shape or the specification of a desired product are used. Also, the material for the substrate is not particularly limited as long as it can endure the heat treatment at the time of forming the coating film 42 for prevention of the adherence of water spots, and ceramics such as glass, porcelain, and the like, organic materials such as plastic and the like, and metals such as stainless steel may be exemplified. Among these, from the viewpoint that the effect of preventing the adherence of water spots is excellent, a sanitary ware such as a toilet, a wash basin, and the like, a ceramic-made product such as tiles used in a bathroom, and a glazed product may be exemplified.

The region for forming the coating film is required to be at least a region in which there is a concern that water spots may be attached on the surface of the substrate, and for this, a configuration in which the coating film is formed over the entire surface of the substrate is also acceptable.

The coating film 42 contains silicon (Si), zirconium (Zr), and oxygen (O), and the mass percentage of silicon oxide (SiO₂) is 50% by mass or less, more preferably 1% by mass or more and 40% by mass or less, and even more preferably 1% by mass or more and 20% by mass or less, based on the total amount of zirconium oxide (ZrO₂) and silicon oxide (SiO₂), as the zirconium (Zr) component and the silicon (Si) component are taken up in terms of zirconium oxide (ZrO₂) and silicon oxide (SiO₂) , respectively.

Here, the reason why the mass percentage of silicon oxide (SiO₂) based on the total amount of zirconium oxide (ZrO₂) and silicon oxide (SiO₂) is set to be 50% by mass or less is that if the mass percentage of silicon oxide (SiO₂) is more than 50% by mass, the adherence of water spots cannot be prevented, and further, once the water spots are adhered, they cannot be removed by wiping with a damp cloth or washing with water.
Particularly, in the case where the mass percentage of silicon oxide (SiO₂) is 1% by mass or more and 20% by mass or less, the adherence of water spots can be prevented more efficiently, and also, even though the water spots are adhered, the water spots can be removed more efficiently and easily by washing with water, which is thus preferable.

The thickness of the coating film 42 is preferably 0.001 µm or more and 10 µm or less.
If the thickness of the coating film 42 is less than 0.001 µm, provision of an antifouling property, that is, the antifouling property against water spots and the easy removability of the adhered water spots become insufficient, whereas if the thickness is more than 10 µm, the impact resistance of the coating film 42 itself is reduced, thereby easily generating cracks, which is thus not preferable.
Particularly, in order to prevent the generation of interference color, it is suitable that the thickness of the coating film 42 be 0.1 µm or less.

This sanitary ware 41 can be prepared, for example, by the first production process as follows.
That is, this first production process comprises applying a first coating liquid including one or two or more zirconium (Zr) components selected from the group consisting of a zirconium alkoxide, a hydrolysate of the zirconium alkoxide, a chelate compound of the zirconium alkoxide, a chelate compound of the hydrolysate of the zirconium alkoxide, and a zirconium oxide fine powder having an average particle of 20 nm or less, a silicon (Si) component, and a solvent, in which the mass percentage of silicon oxide (SiO₂) is 50% by mass or less, more preferably 1% by mass or more and 40% by mass or less, and even more preferably 1% by mass or more and 20% by mass or less, based on the total amount of zirconium oxide (ZrO₂) and silicon oxide (SiO₂), as the zirconium (Zr) component and the silicon (Si) component are taken up in terms of zirconium oxide (ZrO₂) and silicon oxide (SiO₂), respectively, onto the surface of a substrate 2, thereby forming an applied film, and then subjecting the applied film to heat treatment at a temperature of room temperature (25°C) or higher, more preferably 100°C or higher, and even more preferably 400°C or higher under an air atmosphere.

The zirconium alkoxide in the first coating liquid is not particularly limited, but examples thereof include zirconium tetra-normal butoxide and zirconium tetrapropoxide. Since the zirconium tetra-normal butoxide or zirconium tetrapropoxide has a suitable hydrolysis rate and further has easy handleability, a thin film having a homogeneous film quality can be formed therefrom.

Furthermore, the hydrolysate of the zirconium alkoxide is not particularly limited, but examples thereof include a hydrolysate of zirconium tetra-normal butoxide and a hydrolysate of zirconium tetrapropoxide. The hydrolysis rate of the hydrolysate is not particularly limited, and a hydrolysis rate in the range of more than 0% by mole to 100% by mole can be used for this.

The zirconium alkoxide or the hydrolysate of the zirconium alkoxide has high moisture absorptivity, is unstable, and has insufficient storage stability, and accordingly, it requires a high degree of care when handled.
Therefore, from the viewpoint of easy handleability, it is preferable to use a chelate compound of the zirconium alkoxide and a chelate compound of the hydrolysate of the zirconium alkoxide, which are obtained by the chelation of the zirconium alkoxide or the hydrolysate of the zirconium alkoxide.

Examples of the chelate compound of the zirconium alkoxide include a reaction product between a zirconium alkoxide and one or two or more hydrolysis inhibitors selected from the group of an ethanolamine such as monoethanolamine, diethanolamine, triethanolamine, and the like, a β-diketone such as acetylacetone and the like, a β-ketonic ester such as methyl acetoacetate, ethyl acetoacetate, diethyl malonate, ethyl phenoxyacetate, and the like, and a carboxylic acid such as acetic acid, lactic acid, citric acid, benzoic acid, malic acid, and the like. Here, the hydrolysis inhibitor refers to a compound having actions of forming a chelate compound with a zirconium alkoxide and inhibiting the hydrolysis reaction of the chelate compound.

Further, examples of the chelate compound of the hydrolysate of the zirconium alkoxide include a reaction product between the hydrolysate of the zirconium alkoxide and one or two or more hydrolysis inhibitors selected from the group of an ethanolamine such as monoethanolamine, diethanolamine, triethanolamine, and the like, a β-diketone such as acetylacetone and the like, a β-ketonic ester such as methyl acetoacetate, ethyl acetoacetate, diethyl malonate, ethyl phenoxyacetate, and the like, and a carboxylic acid such as acetic acid, lactic acid, citric acid, benzoic acid, malic acid, and the like. The definition of the hydrolysis inhibitor is as described above.

The ratio of the hydrolysis inhibitor to the zirconium alkoxide or the hydrolysate of the zirconium alkoxide is preferably from 0.5 fold by mole to 4 folds by mole, and more preferably from 1 fold by mole to 3 folds by mole, of the zirconium (Zr) contained in the zirconium alkoxide or the hydrolysate of the zirconium alkoxide.
This is based on the fact that if the ratio of the hydrolysis inhibitor is less than 0.5 fold by mole, the stability of the first coating liquid becomes insufficient, whereas if it is more than 4 folds by mole, even after the heat treatment, the hydrolysis inhibitor remains in the thin film, and as a result, the hardness of the thin film is reduced.

The chelate compound of the zirconium alkoxide and the chelate compound of the hydrolysate of the zirconium alkoxide may be obtained by dissolving a zirconium alkoxide or a hydrolysate of the zirconium alkoxide in a solvent, and further adding a hydrolysis inhibitor, and performing a chelation reaction in the obtained solvent.

The zirconium oxide fine particle having an average particle diameter of 20 nm or less is not particularly limited, but ones having an average particle diameter of 1 nm or more and 10 nm or less are preferable since they can easily form a thin film having excellent mechanical properties by heat treatment at a relatively low temperature from room temperature (25°C) to about 300°C.

Such a zirconia fine particle can be prepared at a low cost and in a large amount, for example, by the method as shown below (see Japanese Unexamined Patent Application, First Publication No. 2006-016236).
This method is a method involving neutralizing a zirconium salt solution with an alkaline solution to produce a zirconia precursor, and preparing a zirconia nanoparticle from the zirconia precursor, wherein an alkaline solution is added to a zirconium salt solution to partially neutralize the zirconium salt solution, such that m and n satisfy a formula 0.5<n<m ...... (1) when the variance of the zirconium ion or the zirconia ion in the zirconium salt solution is expressed as m and the molar ratio of the hydroxyl groups in the alkaline solution is expressed as n, and an inorganic salt is then added to the partially neutralized solution to give a mixed solution, and heating the mixed solution.

As the inorganic salt, sulfate, carbonate, nitrate, chloride, iodide, bromide, fluoride, or phosphate, including an alkali metal and/or an alkaline earth metal, may be suitably used, and the amount of the inorganic salt to be added is preferably 20% by mass or more based on the value of the zirconium ion or zirconia ion in terms of zirconia in the zirconium salt solution.

On the other hand, if a zirconium oxide fine particle having an average particle diameter of more than 20 nm is used, a thin film having insufficient densification by heat treatment and deteriorated mechanical properties is provided which peels off easily, and accordingly, does not exhibit a sufficient antifouling property.

The silicon component is not particularly limited as long as it is a silicon compound capable of becoming a silicon oxide by heat treatment, and examples thereof include a colloidal silica, a silicon alkoxide, and a hydrolysate of the silicon alkoxide. The hydrolysis rate of the hydrolysate is not particularly limited, and a hydrolysate rate in the range of more than 0% by mole to 100% by mole can be used.

Any solvent which can dissolve or disperse the above-described zirconium component and silicon component can be used without a particular limit. Examples of the solvent include ethers (cellosolves) such as an ethylene glycol monomethyl ether (methyl cellosolve), an ethylene glycol monoethyl ether (ethyl cellosolve), and the like, ketones such as acetone, dimethyl ketone, diethyl ketone, and the like, glycols such as ethylene glycol and the like, higher alcohols, esters, and the like, in addition to water, and a lower alcohol such as methanol, ethanol, 2-propanol, 1-butanol, and the like. Particularly, in the case of using water as the solvent, since when water is contained in an amount which is not less than the amount of the alkoxide to be hydrolyzed, the stability of the coating liquid is reduced, it is thus required that the amount be less than the amount of the alkoxide to be hydrolyzed.

Here, in the case of using a zirconium alkoxide and/or a hydrolysate of the zirconium alkoxide as the zirconium component, or using a silicon alkoxide and/or a hydrolysate of the silicon alkoxide as the silicon component, a catalyst for controlling the hydrolysis reaction of the zirconium component or the silicon component may be added.
As the catalyst, an inorganic acid such as hydrochloric acid, nitric acid, and the like, an organic acid such as citric acid, acetic acid, and the like, and others may be exemplified. Further, it is preferable that the amount of the catalyst to be added is usually from about 0.01 to 10% by mass based on the total amount of the zirconium component and the silicon component in the coating liquid. In addition, there is a concern that the addition of excessive catalyst may corrode a heat treatment furnace upon heat treatment, which is thus not preferable.

From this viewpoint, if a chelate compound of the zirconium alkoxide or a chelate compound of the hydrolysate of the zirconium alkoxide is used as the zirconium component, and colloidal silica is used as the silicon component, it is not necessary to add an acid which is a catalyst for controlling the hydrolysis reaction, and therefore, there is no concern that a heat treatment furnace for performing heat treatment may be corroded when a thin film is formed, which is thus preferable.

In this coating liquid, for the content ratio of the sum of the zirconium component and the silicon component, the content ratio of the sum of zirconium oxide and silicon oxide is preferably 0.1% by mass or more and 10% by mass or less when the zirconium component and the silicon component are taken up in terms of zirconium oxide (ZrO₂) and silicon oxide (SiO₂), respectively.
If the content ratio of the sum is less than 0.1% by mass, it is difficult to form a thin film having a predetermined film thickness, whereas if the content ratio of the sum is more than 10% by mass, the film thickness is over a predetermined film thickness, and accordingly, it becomes a cause of whitening in the thin film, peeling off, or the like, which is thus not preferable.

Next, the first coating liquid is applied onto the surface of the substrate 2. The application method is not particularly limited, and a spraying method, a dipping method, a brush coating method, or the like can be employed. For application, it is preferable that the thickness of the applied film be adjusted in a range such that the film thickness after heat treatment is from 0.005 µm to 10 µm.

The applied film thus obtained is subjected to heat treatment at a temperature of room temperature (25°C) or higher, more preferably 100°C or higher, and even more preferably 400°C or higher, usually for a heat treatment time of 0.1 hour or more and 24 hours or less, thereby forming a thin film.
Here, if the heat treatment time is insufficient, the film strength of the obtained thin film is reduced, which is thus not preferable. On the other hand, if the heat treatment temperature is too high or the heat treatment time is too long, there is a concern that the substrate 2 may be deformed, and accordingly, it is necessary to adjust the heat treatment temperature and the heat treatment time according to the material quality of the substrate 2. In addition, the atmosphere upon heat treatment is not particularly limited, and the heat treatment is usually carried out under an air atmosphere.

The thin film thus obtained has a composition as described in any one of (1) to (4) below.
(1) An inorganic material, wherein the material is composed of a silicon-zirconium oxide having a chemical bond represented by the following formula (1), in which a silicon (Si) atom and a zirconium (Zr) atom are bonded via an oxygen (O) atom, in the molecule skeleton, and the silicon-zirconium oxide forms a three-dimensional network structure: 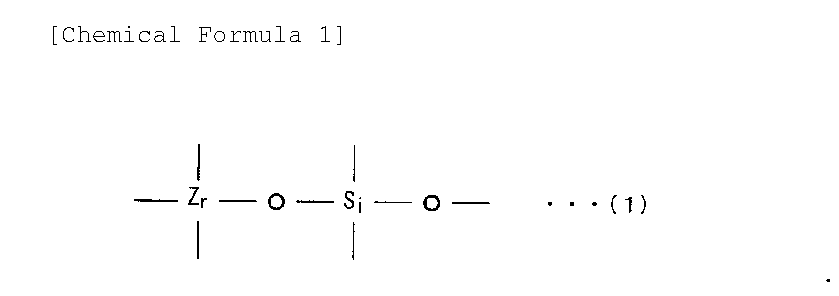
(2) An inorganic material, wherein the material is composed of a zirconium oxide having a chemical bond represented by the following formula (2), in which zirconium (Zr) atoms are bonded to each other via an oxygen (O) atom, in the molecule skeleton, the zirconium oxide forms a three-dimensional network structure, and fine particles of silicon oxide are confined in the three-dimensional network structure: 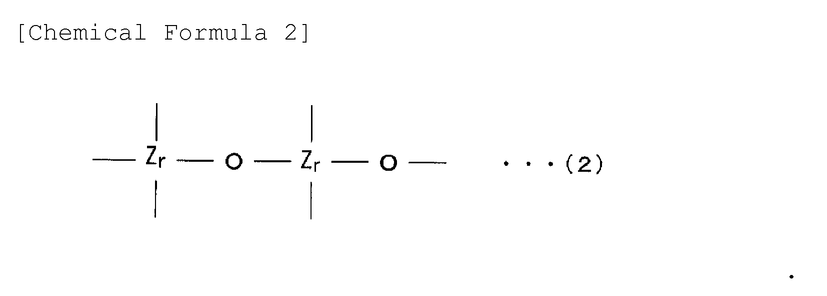
(3) An inorganic material wherein silicon oxide fine particles and zirconium oxide fine particles are dispersed in each other.
(4) A mixture in which any one or two or more of the inorganic materials as described in any one of (1) to (3) are mixed at the same time.

As described above, in the sanitary ware of the present embodiment, a coating film containing silicon (Si), zirconium (Zr), and oxygen (O), in which the mass percentage of silicon oxide (SiO₂) is 50% by mass or less, based on the total amount of zirconium oxide (ZrO₂) and silicon oxide (SiO₂), as the zirconium (Zr) component and the silicon (Si) component are taken up in terms of zirconium oxide (ZrO₂) and silicon oxide (SiO₂), respectively, is formed on at least a part of the surface of the substrate, and as a result, water spots, animal wastes, or the like can be simply removed by approximately wiping with a damp cloth.
Furthermore, since the coating film comprises zirconium oxide (ZrO₂), which is a high refractive index material, as a main component, a high refractive index and reflection with a significant depth is obtained, the appearance is beautiful, and the design property is also improved.

In a process for production of the sanitary ware of the present embodiment, a coating liquid including one or two or more zirconium (Zr) components selected from the group consisting of a zirconium alkoxide, a hydrolysate of the zirconium alkoxide, a chelate compound of the zirconium alkoxide, a chelate compound of the hydrolysate of the zirconium alkoxide, and a zirconium oxide fine powder having an average particle of 20 nm or less, a silicon (Si) component, and a solvent, in which the mass percentage of silicon oxide (SiO₂) is 50% by mass or less, based on the total amount of zirconium oxide and silicon oxide, as the zirconium (Zr) component and the silicon (Si) component are taken up in terms of zirconium oxide (ZrO₂) and silicon oxide (SiO₂), respectively, is applied onto at least a part of the surface of the substrate, thereby forming an applied film, and then the applied film is subjected to heat treatment at a temperature of room temperature (25°C) or higher, and as a result, the sanitary ware of the present embodiment can be easily prepared by means of a simple device.

### <Second Embodiment>

Fig. 2 is a cross-sectional view showing the sanitary ware of a second embodiment of the present invention. The difference in this sanitary ware 1 compared to the sanitary ware 41 of the second embodiment is that for the sanitary ware 41 of the first embodiment, the coating film 42 containing silicon (Si), zirconium (Zr), and oxygen (O) and substantially not containing other components is formed, whereas for the sanitary ware 1 of the present embodiment, the coating film 3 containing silicon (Si), zirconium (Zr), oxygen (O), and phosphorous (P) and substantially not containing other components is formed in the substrate 2 constituting the main body of the sanitary ware and a region of which there is a concern that at least water spots (including contaminants such as animal wastes and the like) may be adhered onto the surface of the substrate 2, and the phosphorus (P) is distributed in at least the outer layer part 3a of the coating film 3.

The coating film 3 contains silicon (Si), zirconium (Zr), oxygen (O), and phosphorus (P), and the mass percentage of silicon oxide (SiO₂) is 50% by mass or less, more preferably 1% by mass or more and 40% by mass or less, and even more preferably 1% by mass or more and 20% by mass or less, based on the total amount of zirconium oxide (ZrO₂) and silicon oxide (SiO₂), as the zirconium (Zr) component and the silicon (Si) component are taken up in terms of zirconium oxide (ZrO₂) and silicon oxide (SiO₂), respectively, and the phosphorus (P) is distributed in at least the outer layer part 3a of the coating film 3.
The outer layer part 3a comprising the phosphorus (P) has an excellent antifouling property against water spots. Further, since the outer layer part 3a contains silicon oxide (SiO₂), the water resistance and the adhesion property to the substrate 2 are excellent.

Here, the reason why the mass percentage of silicon oxide (SiO₂) based on the total amount of zirconium oxide (ZrO₂) and silicon oxide (SiO₂) is set to be 50% by mass or less is that if the mass percentage of silicon oxide (SiO₂) is more than 50% by mass, the adherence of water spots cannot be prevented, and further, once the water spots are adhered, they cannot be removed just by wiping with a damp cloth or washing with water.
Particularly, in the case where the mass percentage of silicon oxide (SiO₂) is 1% by mass or more and 20% by mass or less, the adherence of water spots can be prevented more efficiently, and also, even though the water spots are adhered, the water spots can be removed more efficiently and easily by washing with water, which is thus preferable.

The thickness of the coating film 3 is preferably 0.001 µm or more and 10 µm or less.
If the thickness of the coating film 3 is less than 0.001 µm, provision of an antifouling property, that is, the antifouling property against water spots and the ability to remove the adhered water spots easily becomes insufficient, whereas if the thickness is more than 10 µm, the impact resistance of the coating film 3 itself is reduced, thereby easily generating cracks, which is thus not preferable.
Particularly, in order to prevent the generation of interference color, it is suitable that the thickness of the coating film 3 be 0.1 µm or less.

The thickness of the outer layer part 3a is determined by the heat treatment condition in the "second step" of the second production process to be described later, and under normal heat treatment conditions, it is at least 0.0001 µm or more, and preferably 0.005 µm or more from the surface of the coating film 3.
Further, the concentration of the phosphorus (P) in the outer layer part 3a is not particularly limited, but it is 0.001% by mass or more and 10% by mass or less, and preferably 0.1% by mass or more and 10% by mass or less, and there is a concentration gradient in which the concentration gradually decreases from the surface of the coating film 3 in the depth direction.
If the concentration of the phosphorus (P) in the outer layer part 3a is less than 0.001% by mass, the water spots cannot be removed by a simple cleaning means such as just wiping with a damp cloth or washing with water, whereas if the concentration of the phosphorus (P) in the outer layer part 3a is more than 10% by mass, the water resistance and abrasion resistance of the coating film 3 for prevention of the adherence of water spots is reduced, which is thus not preferable.

In this sanitary ware 1, the coating film 3 for prevention of the adherence of water spots having the outer layer part 3a is formed, and accordingly, the adherence of water spots can be effectively prevented. Further, even though the water spots are adhered, they can be simply removed just by wiping with a damp cloth.
Moreover, the coating film 3 having the outer layer part 3a is also excellent in durability.

It is believed that the reason why the outer layer part 3a of the coating film 3 exhibits an antifouling effect is closely related with the bonding state between the constituent components of the outer layer part 3a, that is, each atom of silicon (Si), zirconium (Zr), and phosphorus (P) and the oxygen (O) atom.
Here, two representative kinds of bonding states will be described.
(1) A case where one silicon (Si) atom has a chemical bond with four oxygen (O) atoms and each of the oxygen (O) atoms has one bonding arm, as shown in the following structural formula (3) : 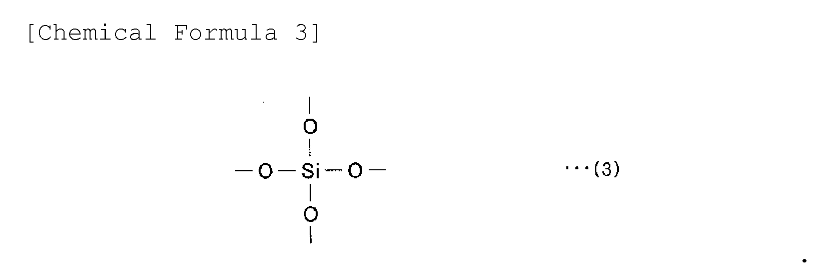
   In this case, a part of the bonding arms of the oxygen (O) atom is bound to hydrogen to give a hydroxyl group (-OH), which allows the exhibition of hydrophilicity. If the outer layer part 3a of the coating film 3 for prevention of the adherence of water spots exhibits hydrophilicity, the water spots are adhered more strongly.
(2) A case where one zirconium (Zr) atom has a chemical bond with three oxygen (O) atoms, and a double bond with one oxygen (O) atom among these oxygen (O) atoms, and the other oxygen (O) atoms have one bonding arm, respectively, as shown in the following structural formula (4):

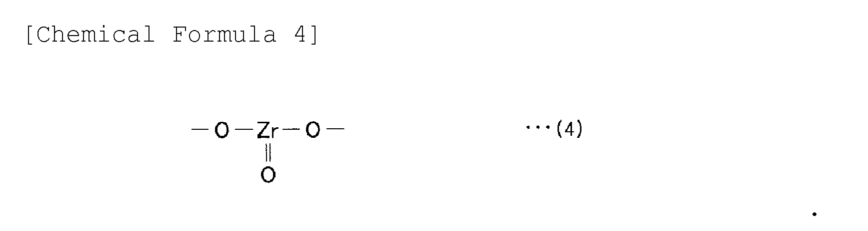

In this case, a part of the bonding arms of the oxygen (O) atom is bound to hydrogen to give a hydroxyl group (-OH), which allows the exhibition of hydrophilicity. If the outer layer part 3a of the coating film 3 for prevention of the adherence of water spots exhibits hydrophilicity, the water spots are adhered more strongly.

If phosphorus (P) is contained in the coating film 3 having such a chemical bond between a silicon (Si) atom and an oxygen (O) atom and a chemical bond between a zirconium (Zr) atom and an oxygen (O) atom, the phosphorus (P) is crosslinked with a bonding arm of the oxygen (O) atom by a dehydration/condensation reaction, for example, as shown by the following structural formula (5), thereby further generating a double bond. Since this double bond is not a hydroxyl group (-OH), a little hydrophobicity is exhibited.

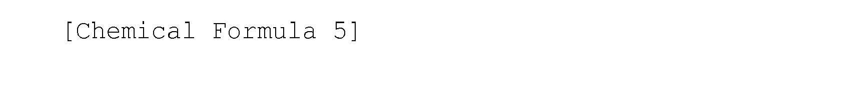

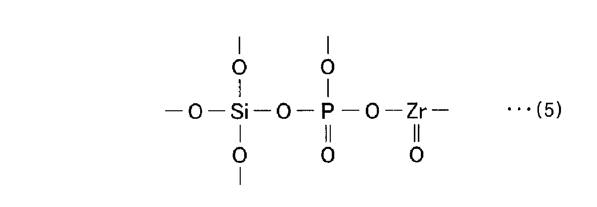

As a result, the outer layer part 3a of the coating film 3 is provided with suitable hydrophilicity and hydrophobicity for water spots, and accordingly, the adhesion property of the water spots to the outer layer part 3a is reduced, thereby preventing the adherence of water spots effectively. By this, even though the water spots are adhered, they can be simply removed just by wiping with a damp cloth.

This sanitary ware 1 can be prepared, for example, by the second production process as described below.
That is, this second production process comprises a first step of applying a second coating liquid including one or two or more zirconium (Zr) components selected from the group consisting of a zirconium alkoxide, a hydrolysate of the zirconium alkoxide, a chelate compound of the zirconium alkoxide, a chelate compound of the hydrolysate of the zirconium alkoxide, and a zirconium oxide fine powder having an average particle of 20 nm or less, a silicon (Si) component, and a solvent, in which the mass percentage of silicon oxide (SiO₂) is 50% by mass or less, more preferably 1% by mass or more and 40% by mass or less, and even more preferably 1% by mass or more and 20% by mass or less, based on the total amount of zirconium oxide (ZrO₂) and silicon oxide (SiO₂), as the zirconium (Zr) component and the silicon (Si) component are taken up in terms of zirconium oxide (ZrO₂) and silicon oxide (SiO₂), respectively, onto the surface of the substrate 2, thereby forming an applied film, and then subjecting the applied film to heat treatment at a temperature of room temperature (25°C) or higher, more preferably 100°C or higher, and even more preferably 400°C or higher, thereby forming a thin film, and then a second step of applying a solution or dispersion containing a phosphorus (P) component onto the thin film, and subjecting it to heat treatment at a temperature of room temperature (25°C) or higher, more preferably 100°C or higher, and even more preferably 400°C or higher, thereby incorporating the phosphorus (P) component into the thin film.

The zirconium alkoxide in this second coating liquid is not particularly limited, but examples thereof include zirconium tetra-normal butoxide and zirconium tetrapropoxide. This zirconium tetra-normal butoxide or zirconium tetrapropoxide has a suitable hydrolysis rate and increased handleability, and as a result, a thin film having a homogeneous film property can be formed therefrom.

Furthermore, the hydrolysate of the zirconium alkoxide is not particularly limited, but examples thereof include a hydrolysate of zirconium tetra-normal butoxide and a hydrolysate of zirconium tetrapropoxide. The hydrolysis rate of the hydrolysate is not particularly limited, and the hydrolysate of a hydrolysis rate in the range of more than 0% by mole to 100% by mole can be used.

The zirconium alkoxide or the hydrolysate of the zirconium alkoxide has a high moisture absorptivity and is very unstable, and in addition, has deteriorated storage stability regarding the second coating liquid, and therefore, it is preferable to use a chelate compound of the zirconium alkoxide or a chelate compound of the hydrolysate of the zirconium alkoxide formed by chelation of the zirconium alkoxide or the hydrolysate of the zirconium alkoxide.

Examples of the chelate compound of the zirconium alkoxide include a reaction product between a zirconium alkoxide and one or two or more hydrolysis inhibitors selected from the group of an ethanolamine such as monoethanolamine, diethanolamine, triethanolamine, and the like, a β-diketone such as acetylacetone and the like, a β-ketonic ester such as methyl acetoacetate, ethyl acetoacetate, diethyl malonate, ethyl phenoxyacetate, and the like, and a carboxylic acid such as acetic acid, lactic acid, citric acid, benzoic acid, malic acid, and the like. Here, the hydrolysis inhibitor refers to a compound having actions of forming a chelate compound with a zirconium alkoxide and inhibiting the hydrolysis reaction of the chelate compound.

Further, examples of the chelate compound of the hydrolysate of the zirconium alkoxide include a reaction product between the zirconium alkoxide and one or two or more hydrolysis inhibitors selected from the group of an ethanolamine such as monoethanolamine, diethanolamine, triethanolamine, and the like, a β-diketone such as acetylacetone and the like, a β-ketonic ester such as methyl acetoacetate, ethyl acetoacetate, diethyl malonate, ethyl phenoxyacetate, and the like, and a carboxylic acid such as acetic acid, lactic acid, citric acid, benzoic acid, malic acid, and the like. The definition of the hydrolysis inhibitor is as described above.

The ratio of the hydrolysis inhibitor to the zirconium alkoxide or the hydrolysate of the zirconium alkoxide is preferably from 0.5 fold by mole to 4 folds by mole, and more preferably from 1 fold by mole to 3 folds by mole, of the zirconium (Zr) contained in the zirconium alkoxide or the hydrolysate of the zirconium alkoxide.
This is based on the fact that if the ratio of the hydrolysis inhibitor is less than 0.5 fold by mole, the stability of the coating liquid becomes insufficient, whereas if it is more than 4 folds by mole, even after the heat treatment, the hydrolysis inhibitor remains in the thin film, and as a result, the hardness of the thin film is reduced.

The chelate compound of the zirconium alkoxide and the chelate compound of the hydrolysate of the zirconium alkoxide may be obtained by dissolving a zirconium alkoxide or a hydrolysate of the zirconium alkoxide in a solvent, and further adding a hydrolysis inhibitor, and performing a chelation reaction in the obtained solvent.

The silicon component is not particularly limited as long as it is a silicon compound capable of being converted into a silicon oxide by heat treatment, but examples thereof include a colloidal silica, a silicon alkoxide, and a hydrolysate of the silicon alkoxide. The hydrolysis rate of the hydrolysate is not particularly limited, and the hydrolysate of a hydrolysis rate in the range of more than 0% by mole to 100% by mole can be used.

Any solvent which can dissolve or disperse the above-described zirconium component and silicon component can be used without a particular limit. Examples of the solvent include ethers (cellosolves) such as an ethylene glycol monomethyl ether, an ethylene glycol monoethyl ether, and the like, ketones such as acetone, dimethyl ketone, diethyl ketone, and the like, glycols such as ethylene glycol and the like, higher alcohols, esters, and the like, in addition to water, and a lower alcohol such as methanol, ethanol, 2-propanol, 1-butanol, and the like. Particularly, in the case of using water as the solvent, when water is contained in an amount that is not less than the amount of the alkoxide to be hydrolyzed, the stability of the coating liquid is reduced, which is thus not preferable.

Here, in the case of using a zirconium alkoxide and/or a hydrolysate of the zirconium alkoxide as the zirconium component, or using a silicon alkoxide and/or a hydrolysate of the silicon alkoxide as the silicon component, a catalyst for controlling the hydrolysis reaction of the zirconium component or the silicon component may be added.
As the catalyst, an inorganic acid such as hydrochloric acid, nitric acid, and the like, an organic acid such as citric acid, acetic acid, and the like, and others may be exemplified. Further, it is preferable that the amount of the catalyst to be added is usually from about 0.01 to 10% by mass based on the total amount of the zirconium component and the silicon component in the coating liquid. In addition, there is a concern that the addition of excessive catalyst may corrode a heat treatment furnace upon heat treatment, which is thus not preferable.

From this viewpoint, if a chelate compound of the zirconium alkoxide or a chelate compound of the hydrolysate of the zirconium alkoxide is used as the zirconium component, and colloidal silica is used as the silicon component, it is not necessary to add an acid which is a catalyst for controlling the hydrolysis reaction, and therefore, there is no concern that a heat treatment furnace for performing heat treatment may be corroded when a thin film is formed, which is thus preferable.

In this coating liquid, for the content ratio of the sum of the zirconium component and the silicon component, the content ratio of the sum of zirconium oxide and silicon oxide is 0.1% by mass or more and 10% by mass or less when the zirconium component and the silicon component are taken up in terms of zirconium oxide (ZrO₂) and silicon oxide (SiO₂), respectively.
If the content ratio of the sum is less than 0.1% by mass, it is difficult to form a thin film having a predetermined film thickness, whereas if the content ratio of the sum is more than 10% by mass, the film thickness is more than a predetermined film thickness, and accordingly, it becomes a cause of thin film whitening, peeling off, or the like, which is thus not preferable.

Next, the second coating liquid is applied onto the surface of the substrate 2. The application method is not particularly limited, and a spraying method, a dipping method, a brush coating method, or the like can be employed. For application, it is preferable that the thickness of the applied film be adjusted in a range such that the film thickness after heat treatment is from 0.001 µm to 10 µm.

The applied film thus obtained is subjected to heat treatment at a temperature of room temperature (25°C) or higher, more preferably 100°C or higher, and even more preferably 400°C or higher, usually for a heat treatment time of 0.1 hour or more and 24 hours or less, thereby forming a thin film.
Here, if the heat treatment time is insufficient, the film strength of the obtained thin film is reduced, which is thus not preferable. On the other hand, if the heat treatment temperature is too high or the heat treatment time is too long, there is a concern that the substrate 2 may be deformed, and accordingly, it is necessary to adjust the heat treatment temperature and the heat treatment time according to the quality of the material of the substrate 2. In addition, the atmosphere upon heat treatment is not particularly limited, and the heat treatment is usually carried out under an air atmosphere.

Thereafter, the phosphorus (P) component is dissolved or dispersed in water or an organic solvent to prepare a solution or dispersion containing the phosphorus (P) component.
This phosphorus (P) component is not particularly limited as long as it is a phosphoric compound having phosphorus (P) in the molecule skeleton, such as phosphoric acids such as phosphoric acid, polyphosphoric acid, methaphosphoric acid, and the like, phosphates such as sodium phosphate, sodium hydrogen phosphate, and the like, condensate phosphates such as sodium polyphosphate, sodium methaphosphate, sodium hydrogen polyphosphate, sodium hydrogen methaphosphate, and the like, phosphoric acid compounds such as phosphoric ester and the like, and others.
For the solvent for the solution or dispersion, any solvent capable of dissolving or dispersing the phosphorus (P) component is available, examples thereof include water or an organic solvent, and the organic solvent is not particularly limited.
The phosphorus (P) component is dissolved or dispersed in water or an organic solvent. The organic solvent is not particularly limited.

The concentration of the phosphorus (P) in the solution or dispersion comprising the phosphorus (P) component is not particularly limited, but it is preferably 0.01% by mass or more and 10% by mass or less.
If the concentration of the phosphorus (P) component is less than 0.01% by mass, the antifouling property that is a characteristic effect of the present invention is not sufficiently accomplished, whereas if the concentration of the phosphorus (P) component is more than 10% by mass, there is a concern that the surface of the outer layer part 3a may be roughened, thereby generating surface roughness.
Further, the solution or dispersion comprising the phosphorus (P) may contain a surfactant to improve the applicability.

1 The solution or dispersion comprising the phosphorus (P) component is applied on the coating film 3.
The application method is not particularly limited, and a spraying method, a dipping method, a brush coating method, or the like can be employed. Also, the application amount when the solution or dispersion is applied is not particularly limited as long as it may sufficiently impart an antifouling property on the coating film 3.

Thereafter, a thin film on which the solution or dispersion comprising the phosphorus (P) component is applied is subjected to heat treatment at a temperature of room temperature (25°C) or higher, more preferably 100°C or higher, and even more preferably 400°C or higher for 0.1 hour to 24 hours to impregnate the phosphorus (P) component in the thin film, thereby forming the coating film 3 for prevention of the adherence of water spots.
Here, if the heat treatment time is insufficient, the film strength of the thin film becomes insufficient, and the content ratio of the phosphorus (P) component in the outer layer part 3a of the thin film is insufficient, and accordingly, the effect of preventing the adherence of water spots (including contaminants such as animal wastes and the like) is not accomplished, which is thus not preferable.
Further, if the heat treatment temperature is too high or if the heat treatment time is too long, there is a concern that the substrate 2 may be deformed, and as a result, it is necessary to adjust the heat treatment temperature and the heat treatment time according to the substrate 2. In addition, the atmosphere upon heat treatment is not particularly limited, and the heat treatment is usually carried out under an air atmosphere.

Further, in the case where the thin film obtained in the first step is in a high temperature state, the phosphorus (P) component in the solution or dispersion can be easily impregnated in the thin film simply by applying a solution or dispersion comprising the phosphorus (P) component onto the surface of the thin film. Accordingly, in this case, it is not necessary to carry out the heat treatment of the second step intentionally. The heat treatment of the second step also includes such a heat treatment.
Furthermore, residues may remain on the thin film after the heat treatment in some cases, and they can be easily removed by washing with water or the like.

As described above, in the sanitary ware of the present embodiment, since the outer layer part 3a of the coating film 3 has suitable hydrophilicity and hydrophobicity for water spots, the effect of preventing the adherence of water spots can be excellent, which enables the maintenance of the effect of preventing the adherence of water spots over a long period of time. Accordingly, even when the water spots are adhered onto the surface of a product 1 for preventing the adherence of water spots, the water spots can be easily removed by a simple operation, and therefore, labors such as cleaning works and the like can be reduced and in addition, the working efficiency can also be improved.
Further, since there is no need for strong chemicals or abrasives for removing the adhered water spots, the burden on the environment can be reduced.
In addition, by the process for production of a product for preventing the adherence of water spots of the present embodiment, the product for preventing the adherence of water spots exhibiting the effect can be prepared simply as well as efficiently.

<Third Embodiment>
Fig. 3 is a cross-sectional view showing the sanitary ware of a third embodiment of the present invention. The difference of this sanitary ware 11 compared to the sanitary ware 1 of the second embodiment is that for the sanitary ware 1 of the second embodiment, the coating film 3 containing silicon (Si), zirconium (Zr), oxygen (O), and phosphorus (P) and substantially not containing other components is formed and the phosphorus (P) is distributed in at least the outer layer part 3a of the coating film 3, whereas for the sanitary ware 11 of the present embodiment, the coating film 12 containing silicon (Si), zirconium (Zr), oxygen (O), and phosphorus (P) at predetermined ratios and substantially not containing other components is formed and the phosphorus (P) is approximately uniformly distributed in the coating film 12.

As for the composition of the coating film 12, the coating film contains silicon (Si), zirconium (Zr), oxygen (O), and phosphorus (P), in which the mass percentage of silicon oxide (SiO₂) is 50% by mass or less, more preferably 1% by mass or more and 40% by mass or less, and even more preferably 1% by mass or more and 20% by mass or less, based on the total amount of zirconium oxide (ZrO₂) and silicon oxide (SiO₂), as the zirconium (Zr) component and the silicon (Si) component are taken up in terms of zirconium oxide (ZrO₂) and silicon oxide (SiO₂), respectively, and further, the phosphorus (P) is approximately uniformly distributed in the coating film 12.
Moreover, the entire coating film 12 comprising the phosphorus (P) is provided with an excellent antifouling function, and thus is made of a thin film having an antifouling property. In addition, since the coating film 12 contains silicon oxide (SiO₂), the water resistance and the adhesion property to the substrate 2 are excellent.

Here, the reason why the mass percentage of silicon oxide (SiO₂) based on the total amount of zirconium oxide (ZrO₂) and silicon oxide (SiO₂) is set to be 50% by mass or less is that if the mass percentage of silicon oxide (SiO₂) is more than 50% by mass, the adherence of water spots cannot be prevented, and further, once the water spots was adhered, they cannot be removed just by wiping with a damp cloth or washing with water.
Particularly, in the case where the mass percentage of silicon oxide (SiO₂) is 1% by mass or more and 20% by mass or less, the adherence of water spots can be prevented more efficiently, and also, even though the water spots are adhered, the water spots can be removed more efficiently and easily by washing with water, which is thus preferable.

The concentration of the phosphorus (P) in the coating film 12 is not particularly limited, but it is preferably 0.001% by mass or more and 10% by mass or less, more preferably 0.01% by mass or more and 10% by mass or less, and even more preferably 0.1% by mass or more and 10% by mass or less.
If the concentration of the phosphorus (P) in the coating film 12 is less than 0.001% by mass, the water spots cannot be removed by a simple cleaning means such as just wiping with a damp cloth or washing with water, whereas if the concentration of the phosphorus (P) is more than 10% by mass, the water resistance and abrasion resistance of the coating film 12 is reduced, which is thus not preferable.

The thickness of the coating film 12 is preferably 0.001 µm or more and 10 µm or less.
If the thickness of the coating film 12 is less than 0.001 µm, provision of an antifouling property, that is, the antifouling property against water spots and the ability to remove the adhered water spots easily become insufficient, whereas if the thickness is more than 10 µm, the impact resistance of the coating film 12 itself is reduced, thereby easily generating cracks, which is thus not preferable.
Particularly, in order to prevent the generation of interference color, it is suitable that the thickness of the coating film 12 be 0.1 µm or less.

In the sanitary ware 11, the coating film 12 for prevention of the adherence of water spots in which the phosphorus (P) is approximately uniformly distributed is formed, and accordingly, the adherence of water spots can be effectively prevented. Further, even though the water spots are adhered onto the surface of the sanitary ware 11, the water spots can be easily removed by a simple cleaning means such as just wiping with a damp cloth or washing with water.
In addition, this coating film 12 is also excellent in durability.
Moreover, the reason why the coating film 12 exhibits the effect of preventing the adherence of water spots is the same as for the outer layer part 3a of the coating film 3 for prevention of the adherence of water spots of the second embodiment.

This sanitary ware 11 can be prepared, for example, by the third production process as follows.
That is, this third production process comprises a step of applying a third coating liquid including one or two or more zirconium (Zr) components selected from the group consisting of a zirconium alkoxide, a hydrolysate of the zirconium alkoxide, a chelate compound of the zirconium alkoxide, a chelate compound of the hydrolysate of the zirconium alkoxide, and a zirconium oxide fine powder having an average particle of 20 nm or less, a silicon (Si) component, a phosphorus (P) component, and a solvent, in which the mass percentage of silicon oxide (SiO₂) is 50% by mass or less, more preferably 1% by mass or more and 40% by mass or less, and even more preferably 1% by mass or more and 20% by mass or less, based on the total amount of zirconium oxide (ZrO₂) and silicon oxide (SiO₂), as the zirconium (Zr) component and the silicon (Si) component are taken up in terms of zirconium oxide (ZrO₂) and silicon oxide (SiO₂), respectively, onto the surface of the substrate 2, thereby forming an applied film, and then subjecting the applied film to heat treatment at a temperature of room temperature (25°C) or higher, more preferably 100°C or higher, and even more preferably 400°C or higher.

The concentration of the phosphorus (P) component in the third coating liquid is not particularly limited, but it is preferable that the mass percentage of the phosphorus (P) is 0.001% by mass or more and 10% by mass or less, based on the total amount of zirconium oxide (ZrO₂) and silicon oxide (SiO₂), as the phosphorus (P) component, the zirconium component, and the silicon component are taken up in terms of phosphorus (P), zirconium oxide (ZrO₂), and silicon oxide (SiO₂), respectively, from the viewpoint that the obtained coating film 12 is excellent in prevention of the adherence of water spots and the adherence of water spots can be prevented more efficiently, and in addition, even though the water spots are adhered, the water spots can be removed more efficiently as well as easily by washing with water.

In the third coating liquid, a zirconium alkoxide, a hydrolysate of the zirconium alkoxide, a chelate compound of the zirconium alkoxide, a chelate compound of the hydrolysate of the zirconium alkoxide, a hydrolysis inhibitor, a silicon component, a solvent, a catalyst, and a phosphorus (P) component are the same as for each of the components in the second coating liquid of the second embodiment.

The method for applying the third coating liquid onto the substrate 2 is not particularly limited, and a spraying method, a dipping method, a brush coating method, or the like can be employed.
Thereafter, the substrate 2 on which the third coating liquid has been applied is subjected to heat treatment at a temperature of room temperature (25°C) or higher, more preferably 100°C or higher, and even more preferably 400°C or higher, usually for a heat treatment time of 0.1 hour or more and 24 hours or less, thereby forming the coating film 12 on the substrate 2.

Here, if the heat treatment time is insufficient, the film strength of the coating film 12 becomes insufficient, and the content ratio of the phosphorus (P) component in the outer layer part 3a of the thin film is insufficient, and accordingly, the effect of preventing the adherence of water spots (including contaminants such as animal wastes and the like) is not accomplished, which is thus not preferable.
Further, if the heat treatment temperature is too high or if the heat treatment time is too long, there is a concern that the substrate 2 may be deformed, and as a result, it is necessary to adjust the heat treatment temperature and the heat treatment time according to the substrate 2. In addition, the atmosphere upon heat treatment is not particularly limited, and the heat treatment is usually carried out under an air atmosphere.
Residues may remain on the thin film after the heat treatment in some cases, and they can be easily removed by washing with water or the like.

The sanitary ware 11 can also be prepared by the second production process of the second embodiment. That is, upon heat treatment in the "second step" of the above-described second production process, the solution or dispersion comprising the phosphorus (P) component is permeated into the deep part (lower part) of the thin film, and the heat treatment is carried out to perform a chemical reaction with phosphorus (P) even in the deep part of the thin film.

In the present embodiment, the same effect as the second embodiment can also be exhibited.
Further, since the phosphorus (P) is approximately uniformly distributed in the coating film 12, the uniformity in terms of the antifouling property in the surface of the sanitary ware 11 is improved.

### <Fourth Embodiment>

Fig. 4 is a cross-sectional view showing the sanitary ware of a fourth embodiment of the present invention. The difference of this sanitary ware 21 compared to the sanitary ware 1 of the second embodiment is that for the sanitary ware 1 of the second embodiment, the coating film 3 containing silicon (Si), zirconium (Zr), oxygen (O), and phosphorus (P) and substantially not containing other components is formed and the phosphorus (P) is distributed in at least the outer layer part 3a of the coating film 3, whereas for the sanitary ware 21 of the present embodiment, the coating film 22 containing zirconium (Zr), oxygen (O), and phosphorus (P) and substantially not containing other components is formed and the phosphorus (P) is distributed in at least the outer layer part 22a of the coating film 22.

The thickness of the coating film 22 is preferably 0.001 µm or more and 10 µm or less.
If the thickness of the coating film 22 is less than 0.001 µm, the provision of an antifouling property, that is, the antifouling property against water spots and the ability to remove the adhered water spots easily, becomes insufficient, whereas if the thickness is more than 10 µm, the impact resistance of the coating film 22 itself is reduced, thereby easily generating cracks, which is thus not preferable.
Particularly, in order to prevent the generation of interference color, it is suitable that the thickness of the coating film 22 be 0.1 µm or less.

The thickness of the outer layer part 22a is determined by the heat treatment condition in the "second step" of the fourth production process to be described later, and under normal heat treatment conditions, it is at least 0.0001 µm or more, and preferably 0.005 µm or more from the surface of the coating film 22.
Further, the concentration of the phosphorus (P) in the outer layer part 22a is not particularly limited, but it is 0.001% by mass or more and 10% by mass or less, and preferably 0.1% by mass or more and 10% by mass or less, and there is a concentration gradient in which the concentration gradually decreases from the surface of the coating film 22 in the depth direction.
If the concentration of the phosphorus (P) in the outer layer part 22a is less than 0.001% by mass, the water spots cannot be removed by a simple cleaning means such as just wiping with a damp cloth or washing with water, whereas if the concentration of the phosphorus (P) in the outer layer part 22a is more than 10% by mass, the water resistance and abrasion resistance of the coating film 22 for prevention of the adherence of water spots are reduced, which is thus not preferable.

In this sanitary ware 21, the coating film 22 for prevention of the adherence of water spots having the outer layer part 22a is formed, and accordingly, the adherence of water spots can be effectively prevented. Further, even though the water spots are adhered, they can be simply removed just by wiping with a damp cloth.
Moreover, the coating film 22 having the outer layer part 22a is also excellent in durability.

It is believed that the reason why the outer layer part 22a exhibits an antifouling effect is closely related with the bonding state between the constituent components of the outer layer part 22a, that is, each atom of zirconium (Zr) and phosphorus (P), and the oxygen (O) atom.
That is, one zirconium (Zr) atom has a chemical bond with three oxygen (O) atoms and a double bond with one oxygen (O) atom out of the oxygen (O) atoms, and the other oxygen (O) atoms has one bonding arm, respectively, as shown in the following structural formula (6):

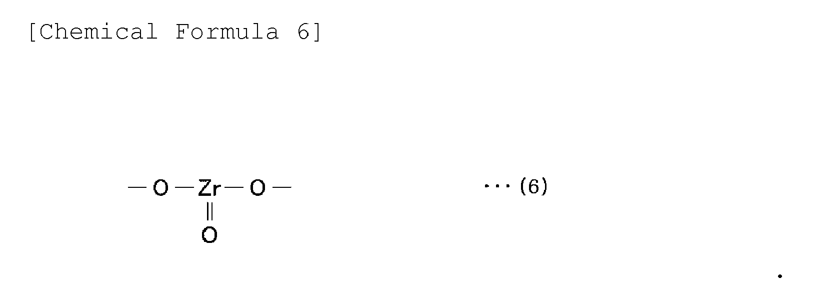

A part of the bonding arms of the oxygen (O) atom is bound to hydrogen to give a hydroxyl group (-OH), which allows the exhibition of hydrophilicity. If the outer layer part 22a of the coating film 22 for prevention of the adherence of water spots exhibits hydrophilicity, the water spots are adhered more strongly.

If phosphorus (P) is contained in the coating film 22 having such a chemical bond between a zirconium (Zr) atom and an oxygen (O) atom, the phosphorus (P) is crosslinked with a bonding arm of the oxygen (O) atom by a dehydration/condensation reaction, for example, as shown by the following structural formula (7), thereby further generating a double bond. Since this double bond is not a hydroxyl group (-OH), a little hydrophobicity is exhibited.

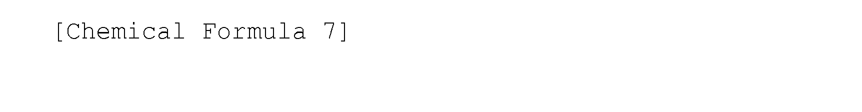

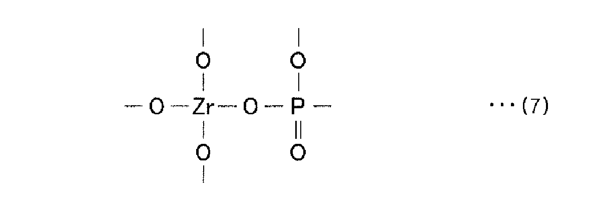

As a result, since the outer layer part 22a of the coating film 22 is provided with suitable hydrophilicity and hydrophobicity for water spots, the adhesion property of the water spots to the coating film 22 for prevention of the adherence of water spots is reduced, thereby preventing the adherence of water spots effectively. By this, even when the water spots are adhered, the water spots can be removed more efficiently as well as easily by washing with water.

This sanitary ware 21 can be prepared, for example, by the fourth production process as described below.
That is, this fourth production process comprises a first step of applying a fourth coating liquid including one or two or more zirconium (Zr) components selected from the group consisting of a zirconium alkoxide, a hydrolysate of the zirconium alkoxide, a chelate compound of the zirconium alkoxide, a chelate compound of the hydrolysate of the zirconium alkoxide, and a zirconium oxide fine powder having an average particle of 20 nm or less, and a solvent, onto the surface of the substrate 2, thereby forming an applied film, and then subjecting the applied film to heat treatment at a temperature of room temperature (25°C) or higher, more preferably 100°C or higher, and even more preferably 400°C or higher, thereby forming a thin film, and then a second step of applying a solution or dispersion containing a phosphorus (P) component onto the thin film, and subjecting it to heat treatment at a temperature of room temperature (25°C) or higher, more preferably 100°C or higher, and even more preferably 400°C or higher, thereby incorporating the phosphorus (P) component into the thin film.

In the fourth coating liquid, the zirconium alkoxide, the hydrolysate of the zirconium alkoxide, the chelate compound of the zirconium alkoxide, the chelate compound of the hydrolysate of the zirconium alkoxide, the hydrolysis inhibitor, the solvent, the catalyst are the same as each of the components in the second coating liquid of the second embodiment.

The method for applying the fourth coating liquid onto the substrate 2 is not particularly limited, and a spraying method, a dipping method, a brush coating method, or the like can be employed.
Thereafter, the substrate 2 on which the fourth coating liquid has been applied is subjected to heat treatment at a temperature of room temperature (25°C) or higher, more preferably 100°C or higher, and even more preferably 400°C or higher, usually for 0.1 hour or more and 24 hours or less, thereby forming a coating film 22 on the substrate 2.

Here, if the heat treatment time is insufficient, the film strength of the coating film 22 becomes insufficient, and the content of the phosphorus (P) component in the outer layer part 3a of the thin film is insufficient, and accordingly, the effect of preventing the adherence of water spots (including contaminants such as animal wastes and the like) is not accomplished, which is thus not preferable.
Further, if the heat treatment temperature is too high or if the heat treatment time is too long, there is a concern that the substrate 2 may be deformed, and as a result, it is necessary to adjust the heat treatment temperature and the heat treatment time according to the substrate 2. In addition, the atmosphere upon heat treatment is not particularly limited, and the heat treatment is usually carried out under an air atmosphere.

Thereafter, the solution or dispersion comprising the phosphorus (P) component is applied onto the coating film 22. The solution or dispersion comprising the phosphorus (P) component is the same as for the solution or dispersion comprising the phosphorus (P) component of the second embodiment.
The method for applying the solution or dispersion comprising the phosphorus (P) component onto the coating film 22 is not particularly limited, and a spraying method, a dipping method, a brush coating method, or the like can be employed.

Thereafter, the coating film 22 on which the solution or dispersion comprising the phosphorus (P) component has been applied is subjected to heat treatment at a temperature of room temperature (25°C) or higher, more preferably 100°C or higher, and even more preferably 400°C or higher, usually for a heat treatment time from 0.1 hour to 24 hours, thereby impregnating the phosphorus (P) component in the coating film 22.
This is based on the fact that if the heat treatment time is insufficient, the film strength of the coating film 22 becomes insufficient, and the content of the phosphorus (P) component in the outer layer part 22a of the coating film 22 is insufficient, and accordingly, the anti-fouling effect is not accomplished. Further, if the heat treatment temperature is too high or if the heat treatment time is too long, there is a concern that the substrate 2 may be deformed, and as a result, it is necessary to adjust the heat treatment temperature and the heat treatment time according to the substrate 2. The atmosphere upon heat treatment is not particularly limited, and the heat treatment is usually carried out under an air atmosphere.
Residues may remain on the thin film after the heat treatment in some cases, and they can be easily removed by washing with water or the like.
In the present embodiment, the same effect as the second embodiment can also be exhibited.

### <Fifth Embodiment>

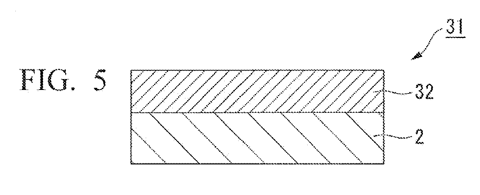

Fig. 5 is a cross-sectional view showing the sanitary ware of a fifth embodiment of the present invention. The difference of this sanitary ware 31 compared to the sanitary ware 11 of the third embodiment is that for the sanitary ware 11 of the third embodiment, the coating film 12 containing silicon (Si), zirconium (Zr), oxygen (O), and phosphorus (P) at predetermined ratios and substantially not containing other components is formed and the phosphorus (P) is approximately uniformly distributed in the coating film 12, whereas for the sanitary ware 31 of the present embodiment, the coating film 32 containing zirconium (Zr), oxygen (O), and phosphorus (P) at predetermined ratios and substantially not containing other components is formed and the phosphorus (P) is approximately uniformly distributed in the coating film 32.
Further, the entire coating film 32 comprising the phosphorus (P) is provided with an excellent antifouling function, and thus is made of a thin film having an antifouling property.

The concentration of the phosphorus (P) in the coating film 32 is not particularly limited, but it is preferably 0.001% by mass or more and 10% by mass or less, and more preferably 0.1% by mass or more and 10% by mass or less.
If the concentration of the phosphorus (P) in the coating film 32 is less than 0.001% by mass, the water spots cannot be removed by a simple cleaning means such as just wiping with a damp cloth or washing with water, whereas if the concentration of the phosphorus (P) is more than 10% by mass, the water resistance and abrasion resistance of the coating film 32 are reduced, which is thus not preferable.

The thickness of the coating film 32 is preferably 0.001 µm or more and 10 µm or less.
If the thickness of the coating film 32 is less than 0.001 µm, the provision of an antifouling property, that is, the antifouling property against water spots and the ability to remove the adhered water spots easily, becomes insufficient, whereas if the thickness is more than 10 µm, the impact resistance of the coating film 32 itself is reduced, thereby easily generating cracks, which is thus not preferable.
Particularly, in order to prevent the generation of interference color, it is suitable that the thickness of the coating film 32 be 0.1 µm or less.

In the sanitary ware 31, the coating film 32 is formed, and accordingly, the adherence of water spots can be effectively prevented. Further, even though the water spots are adhered thereon, the water spots can be easily removed by a simple cleaning means such as wiping with a damp cloth.
Moreover, the coating film 32 is also excellent in durability.
The reason why the coating film 32 exhibits an antifouling effect is the same as for the coating film 22 of the fourth embodiment.

The sanitary ware 31 can be prepared, for example, by the fifth production process as described below.
That is, this fifth production process comprises a step of applying a fifth coating liquid including one or two or more zirconium (Zr) components selected from the group consisting of a zirconium alkoxide, a hydrolysate of the zirconium alkoxide, a chelate compound of the zirconium alkoxide, a chelate compound of the hydrolysate of the zirconium alkoxide, and a zirconium oxide fine powder having an average particle of 20 nm or less, a phosphorus (P) component, and a solvent, onto the surface of the substrate 2, thereby forming an applied film, and then subjecting the applied film to heat treatment at a temperature of room temperature (25°C) or higher, more preferably 100°C or higher, and even more preferably 400°C or higher.

The concentration of the phosphorus (P) component in the fifth coating liquid is not particularly limited, but it is preferable that the mass percentage of the phosphorus (P) is 0.001% by mass or more and 10% by mass or less, based on zirconium oxide (ZrO₂), as the phosphorus (P) component and the zirconium component are taken up in terms of phosphorus (P) and zirconium oxide (ZrO₂), respectively, from the viewpoint that the obtained coating film 32 is excellent in prevention of the adherence of water spots and can prevent the adherence of water spots more efficiently, and in addition, even when the water spots are adhered, the water spots can be removed more efficiently as well as easily by washing with water.

In the fifth coating liquid, the zirconium alkoxide, the hydrolysate of the zirconium alkoxide, the chelate compound of the zirconium alkoxide, the chelate compound of the hydrolysate of the zirconium alkoxide, the hydrolysis inhibitor, the solvent, the catalyst, and the phosphorus (P) component are the same as for each of the components in the second coating liquid of the second embodiment.

The method for applying the fifth coating liquid onto the surface of the substrate 2 is not particularly limited, and a spraying method, a dipping method, a brush coating method, or the like can be employed.
Thereafter, the substrate 2 on which the fifth coating liquid has been applied is subjected to heat treatment at a temperature of room temperature (25°C) or higher, more preferably 100°C or higher, and even more preferably 400°C or higher, usually for a heat treatment time of 0.1 hour to 24 hours, thereby forming the coating film 32 on the substrate 2.

This is based on the fact that if the heat treatment time is insufficient, the film strength of the coating film 32 becomes insufficient. Also, if the heat treatment temperature is too high or if the heat treatment time is too long, there is a concern that the substrate 2 may be deformed, and thus, it is necessary to adjust the heat treatment temperature and the heat treatment time according to the substrate 2. In addition, the atmosphere upon heat treatment is not particularly limited, and the heat treatment is usually carried out under an air atmosphere.
Residues may remain on the thin film after the heat treatment in some cases, and they can be easily removed by washing with water or the like.

The sanitary ware 31 can also be prepared by the fourth production process of the fourth embodiment. That is, upon heat treatment in the "second step" of the above-described fourth production process, the solution or dispersion comprising the phosphorus (P) component is immersed into the deep part (lower part) of the thin film to carry out the heat treatment, thereby performing a chemical reaction with phosphorus (P) even in the deep part of the thin film.
In the present embodiment, the same effect as the third embodiment can also be exhibited.

In the embodiment of the present invention, if a coating liquid is applied onto a substrate using a printing method to form a film having an approximately uniform thickness such that the thickness after heat treatment is in the range from 50 nm to 500 nm, a thin film can be colored in any single color tone depending on the thickness of a thin film, using the interference of light. For example, if the thickness of the film is from 10 to 60 nm, a transparent color is obtained, if the thickness of the film is from 60 to 90 nm, a silver color is obtained, if the thickness of the film is from 90 to 150 nm, a gold color is obtained, if the thickness of the film is from 150 to 190 nm, a violet color is obtained, if the thickness of the film is from 190 to 240 nm, a blue color is obtained, if the thickness of the film is from 240 to 280 nm, a green color is obtained, if the thickness of the film is 280 to 320 nm, a yellow color is obtained, and if the thickness of the film is more than the above range, an iridescent color is obtained.

In addition, in the embodiments of the present invention, the printing method is not particularly limited as long as it is a printing method which is capable of applying an approximately uniform thickness, and examples thereof include an ink jet printing and a screen printing method. Also, if a small amount of titanium components such as titanium alkoxide and the like, hafnium components such as hafnium alkoxide and the like, or yttrium components such as yttrium alkoxide and the like is added to the coating liquid, the coloration becomes vivid.

Furthermore, in the embodiments of the present invention, the zirconium oxide fine particle having an average particle diameter of 20 nm or less is not particularly limited, but one having an average particle diameter of 10 nm or less is preferable since they can easily form a thin film having excellent mechanical properties by heat treatment at a relatively low temperature from room temperature (25°C) to about 300°C.
Such a zirconium oxide fine particle can be prepared at a low cost and in a large amount, for example, by the production process as described in Japanese Unexamined Patent Application, First Publication No. 2006-016236, and is commercially available from Sumitomo Osaka Cement Co., Ltd.

### EXAMPLES

Hereinbelow, the present invention will be described in detail with reference to Examples and Comparative Examples, and the present invention is not intended to be limited to these Examples.

### <Example 1>

6 parts by mass of zirconium tetrabutoxide, 3 parts by mass of ethyl acetoacetate, and 90.9 parts by mass of 2-propanol were mixed at room temperature (25°C) for 30 minutes to produce a chelate compound of the zirconium tetrabutoxide and the ethyl acetoacetate. Then, to this solution was added 0.1 part by mass of tetramethoxysilane, and the obtained solution was diluted by 10-fold with ethylene glycol monobutyl ether (butyl cellosolve) to obtain a coating liquid of Example 1.

In this coating liquid, the mass percentage of silicon oxide (SiO₂) was 2% by mass based on the total amount of zirconium oxide (ZrO₂) and silicon oxide (SiO₂), as the zirconium component and the silicon component were taken up in terms of zirconium oxide (ZrO₂) and silicon oxide (SiO₂), respectively.

Thereafter, a tile having a glazed surface was taken as a specimen, and the coating liquid was spray-coated onto the surface of the specimen in an application amount of 100 g/m², followed by heat treatment and baking at 700°C for 20 minutes under an air atmosphere, thereby forming a thin film on the surface of the specimen. The thickness of the thin film was 0.1 µm.
Thereafter, the specimen in which the thin film had been formed was immersed in a 1% by mass (in terms of P) aqueous sodium tripolyphosphorate solution to allow the surface of the thin film to be sufficiently wet, and then withdrawn, and this specimen was subjected to heat treatment at 250°C for 20 minutes under an air atmosphere. Next, the residues on the thin film were removed by washing with water to obtain a product for preventing the adherence of water spots, in which a coating film for prevention of the adherence of water spots had been formed on the surface.
The content ratio of phosphorus (P) in the surface of the thin film of the product for preventing the adherence of water spots was 0.1% by mass, as measured by an Electron Probe Microanalyzer (EPMA).

Thereafter, the ability to remove the water spots easily and the water resistance of the product for preventing the adherence of water spots were evaluated. The evaluation results are shown in Table 1. Further, "Impregnation" in Table 1 denotes that it was in accordance with the second production process. Further, the evaluation method was as follows.

### (1) Ability to remove water spots easily

1 ml of tap water was dropped to the surface of the product for preventing the adherence of water spots, and the moisture was evaporated by heating at 100°C for 1 hour under air to precipitate the water spots. Then, the water spots were subjected to wiping with a damp cloth using a cloth containing water to evaluate the ability to remove water spots easily.

### (2) Water resistance

The product for preventing the adherence of water spots was immersed for 1 month in boiling water obtained by boiling tap water, and then the surface was rubbed with a kitchen brush to observe the surface of the coating film visually.

### <Example 2>

A coating liquid of Example 2 was obtained in accordance with Example 1, except that the amount of zirconium tetrabutoxide was changed into 1.7 parts by mass, the amount of ethyl acetoacetate was changed into 0.8 part by mass, the amount of 2-propanol was changed into 96.6 parts by mass, and the amount of tetramethoxysilane was changed into 0.9 part by mass.
In the coating liquid of Example 2, the mass percentage of silicon oxide (SiO₂) was 45% by mass, based on the total amount of zirconium oxide (ZrO₂) and silicon oxide (SiO₂), as the zirconium component and the silicon component were taken up in terms of zirconium oxide (ZrO₂) and silicon oxide (SiO₂), respectively.

Thereafter, a product for preventing the adherence of water spots of Example 2 was obtained in accordance with Example 1, except that the coating liquid of Example 2 was used. The thickness of this thin film was 0.1 µm.
The content of phosphorus (P) in the surface of the thin film of the product for preventing the adherence of water spots of Example 2 was 0.1% by mass, as measured by Electron Probe Microanalyzer (EPMA).
Further, ability to remove water spots easily and the water resistance of the product for preventing the adherence of water spots of Example 2 were evaluated in accordance with Example 1. The evaluation results are shown in Table 1.

### <Example 3>

6 parts by mass of zirconium tetrabutoxide, 3 parts by mass of ethyl acetoacetate, and 91 parts by mass of 2-propanol were mixed at room temperature (25°C) for 30 minutes to produce a chelate compound of the zirconium tetrabutoxide and the ethyl acetoacetate. The obtained solution was diluted by 10-fold with ethylene glycol monobutyl ether (butyl cellosolve) to obtain a coating liquid of Example 3.

Thereafter, a product for preventing the adherence of water spots of Example 3 was obtained in accordance with Example 1, except that the coating liquid of Example 3 was used. The thickness of this thin film was 0.1 µm.
The content of phosphorus (P) in the surface of the thin film of the product for preventing the adherence of water spots of Example 3 was 0.1% by mass, as measured by an Electron Probe Microanalyzer (EPMA).
Further, the ability to remove water spots easily and the water resistance of the product for preventing the adherence of water spots of Example 3 were evaluated in accordance with Example 1. The evaluation results are shown in Table 1. Further, "Impregnation" in Table 1 denotes that it was in accordance with the fourth production process.

### <Example 4>

To the coating liquid of Example 1 was added trimethyl phosphate as a phosphorus (P) component to obtain a coating liquid of Example 4. However, for the amount of the phosphorus (P) component to be added, the mass percentage of phosphorus (P) was 1% by mass based on the total amount of zirconium oxide (ZrO₂) and silicon oxide (SiO₂), as the trimethyl phosphate, the zirconium component, and the silicon component were taken up in terms of phosphorous (P), zirconium oxide (ZrO₂), and silicon oxide (SiO₂), respectively.

Thereafter, a product for preventing the adherence of water spots for Example 4 was obtained in accordance with Example 1, except that the coating liquid of Example 4 was used. However, since the coating liquid of Example 4 had been preliminarily added with trimethyl phosphate as the phosphorus (P) component, a treatment with tripolyphosphoric acid was not carried out. The thickness of the thin film was 0.1 µm.
The content ratio of phosphorus (P) on the surface of the thin film of the product for preventing the adherence of water spots of Example 4 was 1% by mass, as measured by an Electron Probe Microanalyzer (EPMA).
In addition, the ability to remove water spots easily and the water resistance of the product for preventing the adherence of water spots of Example 4 were evaluated in accordance with Example 1. The evaluation results are shown in Table 1. Further, "Application" in Table 1 denotes that it was in accordance with the third production process.

### <Example 5>

To the coating liquid of Example 3 was added trimethyl phosphate as the phosphorus (P) component to obtain a coating liquid of Example 5. However, for the amount of the phosphorus (P) component to be added, the mass percentage of phosphorus (P) was 1% by mass based on the zirconium oxide (ZrO₂), as the trimethyl phosphate and the zirconium component were taken up in terms of phosphorus (P) and zirconium oxide (ZrO₂), respectively.

Thereafter, a product for preventing the adherence of water spots for Example 5 was obtained in accordance with Example 3, except that the coating liquid of Example 5 was used. However, since the coating liquid of Example 5 had been preliminarily added with trimethyl phosphate as the phosphorus (P) component, a treatment with tripolyphosphoric acid was not carried out. The thickness of the thin film was 0.1 µm.
The content ratio of phosphorus (P) on the surface of the thin film of the product for preventing the adherence of water spots of Example 5 was 1% by mass, as measured by an Electron Probe Microanalyzer (EPMA).
In addition, the ability to remove water spots easily and the water resistance of the product for preventing the adherence of water spots of Example 5 were evaluated in accordance with Example 1. The evaluation results are shown in Table 1. Further, "Application" in Table 1 denotes that it was in accordance with the fifth production process.

### <Example 6>

A dispersion in which zirconium oxide fine particles having an average particle diameter of 5 nm had been dispersed in water (concentration; 5% by mass) was spray-coated on the specimen used in Example 1 (a tile having a glazed surface) in an application amount of 0.5 g/m² in terms of solids, followed by heat treatment and baking at 250°C for 30 minutes under an air atmosphere to form a thin film on the surface of the specimen (the tile having a glazed surface). The thickness of the thin film was 0.1 µm.
Thereafter, a 1% by mass (in terms of P) aqueous sodium tripolyphosphorate solution was spray-coated onto the thin film, followed by heat treatment at 250°C for 30 minutes under an air atmosphere. The residues on the thin film were removed by washing with water to obtain a product for preventing the adherence of water spots of Example 6.
The content of phosphorus (P) in the surface of the thin film of the product for preventing the adherence of water spots of Example 6 was 0.1% by mass, as measured by an Electron Probe Microanalyzer (EPMA).
Further, the ability to remove water spots easily and the water resistance of the product for preventing the adherence of water spots of Example 6 were evaluated in accordance with Example 1. The evaluation results are shown in Table 1. Further, "Impregnation" in Table 1 denotes that it was in accordance with the fourth production process.

### <Comparative Examples 1 to 3>

In each of the products for preventing the adherence of water spots of Examples 1 to 3, the untreated products before carrying out the tripolyphosphoric acid treatment, that is, a specimen having only the thin film baked (a tile having a glazed surface) were taken as the products for preventing the adherence of water spots of Comparative Examples 1 to 3.
The ability to remove water spots easily and the water resistance of the products for preventing the adherence of water spots of Comparative Examples 1 to 3 were evaluated in accordance with Example 1. The evaluation results are shown in Table 1.

### <Comparative Example 4>

A coating liquid of Comparative Example 4 was obtained in accordance with Example 1, except that the amount of zirconium tetrabutoxide was changed into 1.5 parts by mass, the amount of ethyl acetoacetate was changed into 0.8 part by mass, the amount of 2-propanol was changed into 96.6 parts by mass, and the amount of tetramethoxysilane was changed into 1.1 parts by mass.
In the coating liquid of Comparative Example 4, the mass percentage of silicon oxide (SiO₂) was 55% by mass, based on the total amount of zirconium oxide (ZrO₂) and silicon oxide (SiO₂), as the zirconium (Zr) component and the silicon (Si) component were taken up in terms of zirconium oxide (ZrO₂) and silicon oxide (SiO₂), respectively.

Thereafter, a product for preventing the adherence of water spots of Comparative Example 4 was obtained in accordance with Example 1, except that a coating liquid of Comparative Example 4 was used. The thickness of this thin film was 0.1 µm.
The ability to remove water spots easily and the water resistance of the product for preventing the adherence of water spots of Comparative Example 4 were evaluated in accordance with Example 1. The evaluation results are shown in Table 1. Further, "Impregnation" in Table 1 denotes that it was in accordance with the second production process.

### <Comparative Example 5>

The coating liquid of Example 1 was spray-coated on the surface of the specimen used in Example 1 (a tile having a glazed surface) in an application amount of 100 g/m², followed by heat treatment and baking at 500°C for 20 minutes under an air atmosphere to form a thin film on the surface of the specimen (the tile having a glazed surface). The thickness of the thin film was 0.1 µm.
Thereafter, a 5% by mass aqueous lithium hydroxide solution was applied onto the thin film in an application amount of 50 g/m², followed by heat treatment at 250°C for 20 minutes under an air atmosphere, thereby obtaining a product for preventing the adherence of water spots, in which a thin film having lithium was formed on the surface.
The ability to remove the water spots easily and the water resistance of the product for preventing the adherence of water spots of Comparative Example 5 were evaluated in accordance with Example 1. The evaluation results are shown in Table 1.

**[Table 1]**

| | Amount of SiO₂ in thin film (% by mass) | Phosphorous treatment | Ability to remove water spots easily | Waster resistance |
|---|---|---|---|---|
| Example 1 | 5 | Impregnation | Good | Good |
| Example 2 | 45 | Impregnation | Good | Good |
| Example 3 | 0 | Impregnation | Good | Good |
| Example 4 | 5 | Application | Good | Good |
| Example 5 | 0 | Application | Good | Good |
| Example 6 | 0 | Impregnation | Good | Good |
| Comparative Example 1 | 5 | None | Poor | Good |
| Comparative Example 2 | 45 | None | Poor | Good |
| Comparative Example 3 | 0 | None | Poor | Good |
| Comparative Example 4 | 55 | Impregnation | Poor | Poor |
| Comparative Example 5 | 5 | - | Poor | Good |

According to Table 1, in the products for preventing the adherence of water spots of Examples 1 to 6, the ability to remove water spots easily and the water resistance were both good.
On the other hand, in the products for preventing the adherence of water spots of Comparative Examples 1 to 3, and 5, the water resistance was equal to Examples 1 to 6, but the ability to remove water spots easily was deteriorated.
Furthermore, the products for preventing the adherence of water spots of Comparative Example 4 were deteriorated in both of the ability to remove water spots easily and the water resistance, as compared with Examples 1 to 6.

### <Example 7>

6 parts by mass of zirconium tetrabutoxide, 3 parts by mass of ethyl acetoacetate, and 90.9 parts by mass of 2-propanol were mixed at room temperature (25°C) for 30 minutes to produce a chelate compound of the zirconium tetrabutoxide and the ethyl acetoacetate. Then, to this solution was added 0.1 part by mass of tetramethoxysilane to obtain a coating liquid.
In this coating liquid, the mass percentage of silicon oxide (SiO₂) was 2% by mass, based on the total amount of zirconium oxide (ZrO₂) and silicon oxide (SiO₂), as the zirconium component and the silicon component were taken up in terms of zirconium oxide (ZrO₂) and silicon oxide (SiO₂), respectively.

Thereafter, this coating liquid was spray-coated on the surface of the glazed sanitary ware (toilet) to an application amount (in terms of solids) of 3 g/m², and subjected to heat treatment at 700°C for 20 minutes under an air atmosphere to form a coating film on the surface of the sanitary ware, thereby obtaining the sanitary ware of Example 7.
The thickness of this coating film was 1 µm, and the surface of the sanitary ware had more gloss than before the formation of the coating film, thereby showing a beautiful surface.

Thereafter, the ability to remove water spot contaminants easily and the water resistance of this sanitary ware were evaluated in accordance with Example 1. The evaluation results were shown in Table 2.

### <Example 8>

A coating liquid of Example 8 was obtained in accordance with Example 7, except that the amount of zirconium tetrabutoxide was changed into 2.3 parts by mass, the amount of ethyl acetoacetate was changed into 1.2 parts by mass, the amount of 2-propanol was changed into 96.0 parts by mass, and the amount of tetramethoxysilane was changed into 0.5 part by mass.
In this coating liquid, the mass percentage of silicon oxide (SiO₂) was 25% by mass, based on the total amount of zirconium oxide (ZrO₂) and silicon oxide (SiO₂), as the zirconium component and the silicon component were taken up in terms of zirconium oxide (ZrO₂) and silicon oxide (SiO₂), respectively.

Then, the sanitary ware of Example 8 was obtained in accordance with Example 7, using this coating liquid.
The thickness of this coating film was 1 µm, and the surface of the sanitary ware had more gloss than before the formation of the coating film, thereby showing a beautiful surface.
Thereafter, the ability to remove water spot contaminants easily and the water resistance of this sanitary ware were evaluated in accordance with Example 1. The evaluation results were shown in Table 2.

### <Example 9>

A coating liquid of Example 9 was obtained in accordance with Example 7, except that the amount of zirconium tetrabutoxide was changed into 2.0 parts by mass, the amount of ethyl acetoacetate was changed into 1.0 part by mass, the amount of 2-propanol was changed into 96.3 parts by mass, and the amount of tetramethoxysilane was changed into 0.7 part by mass.
In this coating liquid, the mass percentage of silicon oxide (SiO₂) was 35% by mass, based on the total amount of zirconium oxide (ZrO₂) and silicon oxide (SiO₂), as the zirconium component and the silicon component were taken up in terms of zirconium oxide (ZrO₂) and silicon oxide (SiO₂), respectively.

Thereafter, the sanitary ware of Example 9 was obtained in accordance with Example 7, using the coating liquid.
The thickness of this coating film was 1 µm, and the surface of the sanitary ware had more gloss than before the formation of the coating film, thereby showing a beautiful surface.
Thereafter, the ability to remove water spot contaminants easily and the water resistance of this sanitary ware were evaluated in accordance with Example 1. The evaluation results were shown in Table 2.

### <Example 10>

A coating liquid was obtained by adding 0.4 part by weight of tetramethoxysilane to 99.6 parts by weight of a dispersion having a concentration of 0.8% by weight, in which zirconium oxide fine particles having an average particle diameter of 5 nm had been dispersed in 2-propanol. In this coating liquid, the weight percentage of silicon oxide (SiO₂) was 10% by weight, based on the total amount of zirconium oxide (ZrO₂) and silicon oxide (SiO₂), as the silicon component was taken up in terms of silicon oxide (SiO₂).
Then, the sanitary ware of Example 10 was obtained in accordance with Example 7, using this coating liquid.
The thickness of this coating film was 1 µm, and the surface of the sanitary ware had more gloss than before the formation of the coating film, thereby showing a beautiful surface.
Thereafter, the ability to remove water spot contaminants easily and the water resistance of this sanitary ware were evaluated in accordance with Example 1. The evaluation results were shown in Table 2.

### <Comparative Example 6>

A coating liquid was obtained by mixing 6 parts by mass of zirconium tetrabutoxide, 93 parts by mass of 2-propanol, and 1 part by mass of 60% by mass nitric acid.
Then, the sanitary ware of Comparative Example 6 was obtained in accordance with Example 6, using this coating liquid. The thickness of this coating film was 1 µm.
Thereafter, the ability to remove water spot contaminants easily and the water resistance of this sanitary ware was evaluated in accordance with Example 1. The evaluation results were shown in Table 2.

**[Table 2]**

| | Amount of SiO₂ in thin film (% by mass) | Amount of ZrO₂ in thin film (% by mass) | Ability to remove water spot contaminants easily | Water resistance |
|---|---|---|---|---|
| Example 7 | 2 | 98 | Good | Good |
| Example 8 | 25 | 75 | Good | Good |
| Example 9 | 35 | 65 | Good | Good |
| Example 10 | 10 | 90 | Good | Good |
| Comparative Example 6 | 0 | 100 | Good | Poor (Peeled) |

According to Table 2, in Examples 7 to 10, the ability to remove water spot contaminants easily and the water resistance were both good, whereas in Comparative Example 6, only one of the ability to remove water spot contaminants easily and the water resistance was good.

### <Examples 11 to 20>

Each of the water-washing toilets of Examples 11 to 20 was obtained by changing the specimen (a tile having a glazed surface) into a water-washing toilet, and forming a coating film for prevention of the adherence of water spots inside the water-washing toilet in accordance with Examples 1 to 10, respectively.
For each of the water-washing toilets of Examples 11 to 20, feces were attached and then washed with water, and the presence or absence of the attached feces was examined, and as a result, the adherence of feces was not observed.
Further, as a result of carrying out the attachment and washing with water of the feces repeatedly 10,000 times, the adherence of feces was not observed at all, and it was confirmed that the effect of preventing the adherence can be maintained over a long period of time.

### INDUSTRIAL APPLICABILITY

The sanitary ware of the present invention can be applied to various members or various parts, which require an antifouling property, and has high industrial significance since the water spots (including contaminants such as animal wastes and the like) can be simply removed just by wiping with a damp cloth, by forming a coating film having a certain composition containing silicon (Si), zirconium (Zr), and oxygen (O), on at least a part of the surface of a substrate.
Furthermore, the sanitary ware of the present invention has high industrial significance since water spots (including contaminants such as animal wastes and the like) can be prevented from being adhered onto the surface of the substrate, and also, even when the water spots (including contaminants such as animal wastes and the like) are adhered onto the substrate, they can be easily removed by washing with water, by forming any one of a coating film having a certain composition containing silicon (Si), zirconium (Zr), oxygen (O), and phosphorus (P), and a coating film having a certain composition containing zirconium (Zr), oxygen (O), and phosphorus (P), on the surface of a substrate constituting the main part.

## Claims

1. A sanitary ware comprising a substrate and a coating film formed on the surface of the substrate, wherein the coating film contains silicon (Si), zirconium (Zr), and oxygen (O) and the mass percentage of silicon oxide (SiO₂) is 50% by mass or less, based on the total amount of zirconium oxide (ZrO₂) and silicon oxide (SiO₂), as the zirconium (Zr) and the silicon (Si) are taken up in terms of zirconium oxide (ZrO₂) and silicon oxide (SiO₂), respectively.

2. The sanitary ware according to claim 1, wherein the coating film further contains phosphorus (P), and the phosphorus (P) is distributed on at least an outer layer part of the coating film.

3. A sanitary ware comprising a substrate and a coating film formed on the surface of the substrate, wherein the coating film contains zirconium (Zr), oxygen (O), and phosphorus (P), and the phosphorus (P) is distributed on at least an outer layer part of the coating film.

4. A process for production of a sanitary ware comprising a substrate and a coating film formed on the surface of the substrate, which comprises applying a coating liquid comprising one or two or more zirconium (Zr) components selected from the group consisting of a zirconium alkoxide, a hydrolysate of the zirconium alkoxide, a chelate compound of the zirconium alkoxide, a chelate compound of the hydrolysate of the zirconium alkoxide, and a zirconium oxide fine powder having an average particle of 20 nm or less, a silicon (Si) component, and a solvent, in which the mass percentage of silicon oxide (SiO₂) is 50% by mass or less, based on the total amount of zirconium oxide (ZrO₂) and silicon oxide (SiO₂), as the zirconium (Zr) component and the silicon (Si) component are taken up in terms of zirconium oxide (ZrO₂) and silicon oxide (SiO₂), respectively, onto at least a part of the surface of the substrate, thereby forming an applied film, and then subjecting the applied film to heat treatment at a temperature of room temperature or higher, thereby forming the coating film.

5. The process for production of a sanitary ware according to claim 4, wherein the coating liquid further comprises a phosphorus (P) component.

6. A process for production of a sanitary ware comprising a substrate and a coating film formed on the surface of the substrate, which comprises applying a coating liquid comprising one or two or more zirconium (Zr) components selected from the group consisting of a zirconium alkoxide, a hydrolysate of the zirconium alkoxide, a chelate compound of the zirconium alkoxide, a chelate compound of the hydrolysate of the zirconium alkoxide, and a zirconium oxide fine powder having an average particle of 20 nm or less, a silicon (Si) component, and a solvent, in which the mass percentage of silicon oxide (SiO₂) is 50% by mass or less, based on the total amount of zirconium oxide (ZrO₂) and silicon oxide (SiO₂), as the zirconium (Zr) component and the silicon (Si) component are taken up in terms of zirconium oxide (ZrO₂) and silicon oxide (SiO₂), respectively, onto at least a part of the surface of the substrate, thereby forming an applied film, subjecting the applied film to heat treatment at a temperature of room temperature or higher to give a thin film, then applying a solution or dispersion comprising a phosphorus (P) component onto the thin film, and subsequently subjecting the film to heat treatment at a temperature of room temperature or higher to incorporate the phosphorus (P) component into the thin film, thereby forming the coating film.

7. A process for production of a sanitary ware comprising a substrate and a coating film formed on the surface of the substrate, which comprises applying a coating liquid comprising one or two or more zirconium (Zr) components selected from the group consisting of a zirconium alkoxide, a hydrolysate of the zirconium alkoxide, a chelate compound of the zirconium alkoxide, a chelate compound of the hydrolysate of the zirconium alkoxide, and a zirconium oxide fine powder having an average particle of 20 nm or less, a phosphorus (P) component, and a solvent, onto at least a part of the surface of the substrate, thereby forming an applied film, and then subjecting the applied film to heat treatment at a temperature of room temperature or higher, thereby forming the coating film.

8. A process for production of a sanitary ware comprising a substrate and a coating film formed on the surface of the substrate, which comprises applying a coating liquid comprising one or two or more zirconium (Zr) components selected from the group consisting of a zirconium alkoxide, a hydrolysate of the zirconium alkoxide, a chelate compound of the zirconium alkoxide, a chelate compound of the hydrolysate of the zirconium alkoxide, and a zirconium oxide fine powder having an average particle of 20 nm or less, and a solvent, onto at least a part of the surface of the substrate, thereby forming an applied film, subjecting the applied film to heat treatment at a temperature of room temperature or higher to give a thin film, then applying a solution or dispersion comprising a phosphorus (P) component onto the thin film, and subsequently subjecting the film to heat treatment at a temperature of room temperature or higher to incorporate the phosphorus (P) component into the thin film, thereby forming the coating film.
